# EUROPEAN PATENT APPLICATION

(11) **EP 4 838 955 A1**
(43) Date of publication of application: **11.11.2026**
(21) Application number: 25736229.3
(22) Date of filing: 06.01.2025
(51) Int. Cl.: H04W 36/18, H04W 36/30, H04W 36/00, H04W 74/0816, H04W 74/00, G06N 20/00, H04W 84/12

(54) **METHOD AND APPARATUS FOR MULTI-LINK TIME DIVISION COMMUNICATION SYNCHRONIZATION IN WIRELESS LAN**

(30) Priority: 04.01.2024 KR 20240001459; 05.04.2024 KR 20240046888
(71) Applicant: Holistic Manifold Inc., Daejeon 34129 (KR)
(72) Inventor: KIM, Yongho, Incheon 22003 (KR); MOON, Juseong, Osan-si Gyeonggi-do 18101 (KR)
(74) Representative: HGF
(86) International application number: PCT/KR2025/000263
(87) International publication number: WO 2025/147182

(57) **Abstract**

A method of operating a first AP MLD comprising a first AP associated with a first link and a second AP associated with a second link in a wireless LAN system, the method comprising: receiving, by the first AP MLD, a multi-link resource allocation request from a first station (STA) of a STA MLD on the first link for the first AP of the first AP MLD; transmitting, by the first AP MLD, a first frame on the second link for the second AP of the first AP MLD based on the multi-link resource allocation request to acquire a transmission opportunity (TXOP) on the second link; and allocating a time-division communication period to another wireless LAN terminal within the TXOP based on the first frame, and receiving a second frame in response to the first frame.

## Description

### TECHNICAL FIELD

The present disclosure relates to a method and apparatus for synchronizing multi-link time-division communication in a Wireless Local Area Network (WLAN). More specifically, the present disclosure relates to a method and apparatus for performing communication by overcoming asynchronization through allocating a time-division communication period based on resource information requested by a wireless LAN terminal based on artificial intelligence in a wireless LAN.

The present disclosure relates to a method and apparatus for verifying whether communication is possible with a wireless access point that is a target of roaming when roaming is performed in a wireless LAN.

### BACKGROUND ART

As the proliferation of mobile devices has recently expanded, wireless local area network (WLAN) technology capable of providing fast wireless communication services to mobile devices has been receiving significant attention. WLAN technology may be a technology that enables mobile devices, such as smartphones, smart pads, laptop computers, portable multimedia players, and embedded devices, to wirelessly access the Internet based on short-range wireless communication technology.

Standards utilizing WLAN technology are primarily being developed by the Institute of Electrical and Electronics Engineers (IEEE) as the IEEE 802.11 standard. As the aforementioned WLAN technology has been developed and disseminated, applications utilizing WLAN technology have diversified, and demand for WLAN technology supporting higher reliability has emerged.

As applications requiring higher reliability have emerged, the IEEE 802.11bn standard, which is an Ultra High Reliability (UHR) WLAN technology, is being developed for single Basic Service Set (BSS) environments and/or overlapping BSS environments. The goal of the IEEE 802.11bn standard may be to support improvements in data transmission rate, latency performance, and data error rate. In addition, the IEEE 802.11bn standard may support low-power operation, peer-to-peer communication, operations for increasing channel utilization, coordinated time division multiple access (C-TDMA) operation among multiple APs, multi-link operation, and multi-link resource allocation request operation.

However, a resource allocation request made by a terminal on a multi-link may not be received by an access point (AP) due to interference from other communication terminals in an overlapping BSS environment. Accordingly, resource allocation operations on a multi-link may not be performed, and the performance of the wireless LAN network in an overlapping BSS environment may decrease.

In addition, a wireless LAN terminal in a wireless LAN network may support roaming. However, detailed operations during roaming may not have been defined. In an embodiment, a method for verifying whether a new AP accessed through roaming is capable of communication may not have been defined. The time required to verify whether a new AP accessed through roaming is capable of communication may be considerable. Accordingly, communication errors and communication delays may occur during roaming, and roaming operations may operate inefficiently. That is, the performance of the wireless LAN network may decrease.

Meanwhile, the technology serving as the background of the present disclosure has been described to promote understanding of the background of the present disclosure, and may include content that is not prior art already known to those of ordinary skill in the art to which this technology belongs.

### SUMMARY OF INVENTION

### TECHNICAL PROBLEM

The present disclosure relates to a method and apparatus for synchronizing multi-link time-division communication in a wireless LAN.

The present disclosure relates to a method and apparatus in which a multi-link device (MLD) receives a multi-link resource request in consideration of an interference condition and allocates resources on another link in a wireless LAN.

The present disclosure relates to a method and apparatus in which a MLD receives a multi-link resource request in consideration of an interference condition and releases a synchronization delay timer in a wireless LAN.

The present disclosure relates to a method and apparatus for verifying communication capability of a newly accessed AP through a roaming operation in a wireless LAN.

The technical objectives to be achieved in the present disclosure are not limited to the technical objectives mentioned above, and other technical objectives not mentioned will be clearly understood by those of ordinary skill in the art to which the present disclosure belongs from the description below.

### SOLUTION TO PROBLEM

In accordance with an embodiment of the present disclosure, a method of operating a first access point (AP) multi-link device (MLD) comprising a first AP associated with a first link and a second AP associated with a second link in a wireless LAN system comprises: receiving, by the first AP MLD, a multi-link resource allocation request from a first station (STA) of a STA MLD on the first link for the first AP of the first AP MLD; transmitting, by the first AP MLD, a first frame on the second link for the second AP of the first AP MLD based on the multi-link resource allocation request to acquire a transmission opportunity (TXOP) on the second link; and allocating a time-division communication period to another wireless LAN terminal within the TXOP based on the first frame, and receiving a second frame in response to the first frame.

In accordance with an embodiment of the present disclosure, a first access point (AP) multi-link device (MLD) may comprise a first AP of the first AP MLD associated with a first link, a second AP of the first AP MLD associated with a second link, at least one transceiver configured to transmit and receive signals, at least one processor configured to control at least one of the first AP, the second AP, and the at least one transceiver, and a memory storing instructions that cause the first AP MLD to perform specific operations by the at least one processor. Here, the specific operations comprise: receiving a multi-link resource allocation request from a first STA of a STA MLD on the first link for the first AP of the first AP MLD; transmitting a first frame on the second link for the second AP of the first AP MLD based on the multi-link resource allocation request to acquire a transmission opportunity (TXOP) on the second link; and allocating a time-division communication period to another wireless LAN terminal within the TXOP based on the first frame, and receiving a second frame in response to the first frame.

In addition, the following may be commonly applied.

In accordance with an embodiment of the present disclosure, the multi-link resource allocation request is included in a data frame transmitted by the STA MLD to a second AP MLD for the first STA, wherein the first AP MLD and the second AP MLD are included in the same multi-AP group, the data frame including the multi-link resource allocation request is not received by the second AP MLD, and the first AP MLD may receive the data frame including the multi-link resource allocation request on the first link by overhearing for the first AP of the first AP MLD.

In accordance with an embodiment of the present disclosure, the multi-link resource allocation request includes an indicator requesting resources for the STA MLD on the second link, and the first AP MLD may transmit the first frame on the second link for the second AP of the first AP MLD to allocate a time-division communication period.

In accordance with an embodiment of the present disclosure, when reception of a data frame from the second AP MLD is not detected during a waiting time after the first AP MLD receives the data frame including the multi-link resource allocation request, the first AP MLD may transmit the first frame on the second link to allocate a time-division communication period within the TXOP.

In accordance with an embodiment of the present disclosure, when reception of a data frame from the second AP MLD is not detected during a waiting time and an additional time after the first AP MLD receives the data frame including the multi-link resource allocation request, the first AP MLD may transmit the first frame on the second link to allocate a time-division communication period within the TXOP, wherein the additional time may be set based on retransmission of the STA MLD.

In accordance with an embodiment of the present disclosure, the first AP MLD may perform a channel access operation to transmit the first frame, wherein when a backoff counter reaches 0 before the waiting time according to the channel access operation, the first AP MLD transmits the first frame for the second AP of the first AP MLD after the waiting time, and when the backoff counter reaches 0 after the waiting time according to the channel access operation, the first AP MLD may transmit the first frame for the second AP of the first AP MLD at the slot boundary at which the backoff counter reaches 0.

In accordance with an embodiment of the present disclosure, the first frame includes at least one of information allocating a time-division communication period to the second AP MLD and information allocating a time-division communication period to the STA MLD, and the user information field of the first frame may include at least one of information indicating the second AP MLD and information indicating the STA MLD.

In accordance with an embodiment of the present disclosure, when the first AP MLD allocates a time-division communication period to the second AP MLD according to the information allocating a time-division communication period to the second AP MLD included in the first frame, the first AP MLD receives the second frame from the second AP MLD on the second link in response to the first frame, wherein the time-division communication period may be a period during which communication between the second AP MLD and the STA MLD is performed on the second link.

In accordance with an embodiment of the present disclosure, when a remaining TXOP remains with the first AP MLD after the time-division communication period allocated to the second AP MLD ends, the first AP MLD may reallocate a time-division communication period to another wireless LAN terminal or directly communicate with a wireless LAN terminal connected to the first AP MLD within the remaining TXOP.

In accordance with an embodiment of the present disclosure, when the first AP MLD allocates a time-division communication period to the STA MLD according to the information allocating a time-division communication period to the STA MLD included in the first frame, the first AP MLD receives the second frame from the STA MLD on the second link in response to the first frame, wherein the time-division communication period may be a period during which uplink transmission from the STA MLD to the second AP MLD is performed on the second link.

In accordance with an embodiment of the present disclosure, the first frame further includes bandwidth information based on orthogonal frequency division multiple access together with at least one of information allocating a time-division communication period to the second AP MLD and information allocating a time-division communication period to the STA MLD, and the user information field of the first frame may include at least one of information indicating the second AP MLD and information indicating the STA MLD.

In accordance with an embodiment of the present disclosure, a time-division communication period is allocated after a preset period of time from the point at which the first AP MLD receives the second frame in response to the first frame, and the first AP MLD performs communication with a wireless LAN terminal connected to the first AP MLD on a first bandwidth based on bandwidth information within the time-division communication period, wherein communication between the second AP MLD and the STA MLD may further be performed on a second bandwidth within the time-division communication period.

In accordance with an embodiment of the present disclosure, a synchronization delay timer starts when data frame transmission by the STA MLD ends, and the synchronization delay timer may be released based on at least one of transmission of the first frame, reception of the second frame, and transmission of a third frame based on the second frame.

In accordance with an embodiment of the present disclosure, a synchronization delay timer starts when data frame transmission by the STA MLD ends, wherein the first frame transmitted by the first AP MLD for the second AP of the first AP MLD is a frame that releases the synchronization delay timer, and the TXOP may not be allocated to the first AP MLD by the first frame.

### ADVANTAGEOUS EFFECTS

According to the present disclosure, a method of synchronizing multi-link time-division communication in a wireless LAN may be provided.

According to the present disclosure, a method in which a multi-link device (MLD) receives a multi-link resource request in consideration of an interference condition and allocates resources on another link in a wireless LAN may be provided.

According to the present disclosure, a method in which a MLD receives a multi-link resource request in consideration of an interference condition and releases a synchronization delay timer in a wireless LAN may be provided.

According to the present disclosure, a method of verifying communication capability of a newly accessed AP through a roaming operation in a wireless LAN may be provided.

The effects obtainable from the present disclosure are not limited to the effects mentioned above, and other effects not mentioned will be clearly understood by those of ordinary skill in the art to which the present disclosure belongs from the description below.

### BRIEF DESCRIPTION OF DRAWINGS

FIG. 1 is a diagram illustrating a communication node in a wireless LAN system to which the present disclosure is applied.
FIG. 2 is a diagram illustrating a wireless LAN system to which the present disclosure is applied.
FIG. 3 is a diagram illustrating a machine learning unit to which the present disclosure is applied.
FIG. 4 is a flowchart illustrating a method of performing communication based on a machine learning unit to which the present disclosure is applied.
FIG. 5a through FIG. 5c are diagrams illustrating a method of allocating a coordinated time-division communication period in a multi-link wireless LAN network to which the present disclosure is applied.
FIG. 6 is a diagram illustrating a method of allocating coordinated orthogonal frequency division multiple access resources in a multi-link wireless LAN network to which the present disclosure is applied.
FIG. 7 is a diagram illustrating a method of resolving a communication delay of a wireless LAN terminal in a multi-link wireless LAN network to which the present disclosure is applied.
FIG. 8 is a method illustrating a method of verifying communication capability during wireless LAN roaming to which the present disclosure is applied.
FIG. 9 is a diagram illustrating a method of verifying communication capability during wireless LAN roaming to which the present disclosure is applied.
FIG. 10a and FIG. 10b are diagrams illustrating a method of verifying communication capability during wireless LAN roaming to which the present disclosure is applied.
FIG. 11 is a diagram illustrating a method of verifying communication capability during wireless LAN roaming to which the present disclosure is applied.
FIG. 12 is a flowchart illustrating a method of resolving a communication delay of a wireless LAN terminal in a multi-link wireless LAN network to which the present disclosure is applied.

### DESCRIPTION OF EMBODIMENTS

The present disclosure is susceptible to various modifications and may have various embodiments, and specific embodiments will be illustrated in the drawings and described in detail. However, this is not intended to limit the present disclosure to specific embodiments, and it should be understood that the present disclosure includes all modifications, equivalents, and substitutes within the spirit and technical scope of the present disclosure.

Terms such as first, second, etc. may be used to describe various components, but the components should not be limited by the terms. The terms are used only for the purpose of distinguishing one component from another component. In an embodiment, a first component may be designated as a second component, and similarly, a second component may also be designated as a first component, without departing from the scope of the present disclosure. The term "and/or" includes any combination of a plurality of related listed items or any one of a plurality of related listed items.

When a component is referred to as being "connected" or "coupled" to another component, it should be understood that the component may be directly connected or coupled to the other component, but another component may also exist in between. On the other hand, when a component is referred to as being "directly connected" or "directly coupled" to another component, it should be understood that no other component exists in between.

The terms used in the present disclosure are used only to describe specific embodiments and are not intended to limit the present disclosure. Singular expressions include plural expressions unless the context clearly indicates otherwise. In the present disclosure, terms such as "comprise" or "have" are intended to designate the presence of features, numbers, steps, operations, components, parts, or combinations thereof described in the specification, and should be understood as not precluding the possibility of the presence or addition of one or more other features, numbers, steps, operations, components, parts, or combinations thereof.

Unless otherwise defined, all terms used herein, including technical or scientific terms, have the same meaning as commonly understood by those of ordinary skill in the art to which the present disclosure pertains. Terms defined in commonly used dictionaries should be interpreted as having meanings consistent with the meanings they have in the context of the relevant art, and unless explicitly defined in the present disclosure, should not be interpreted in an ideal or excessively formal sense.

Hereinafter, preferred embodiments of the present disclosure will be described in greater detail with reference to the accompanying drawings. In describing the present disclosure, the same reference numerals are used for the same components in the drawings to facilitate overall understanding, and duplicate descriptions of the same components are omitted.

In the following, a wireless communication system to which embodiments according to the present disclosure are applied will be described. The wireless communication system to which the embodiments according to the present disclosure are applied is not limited to the content described below, and the embodiments according to the present disclosure may be applied to various wireless communication systems. A wireless communication system may be referred to as a "wireless communication network."

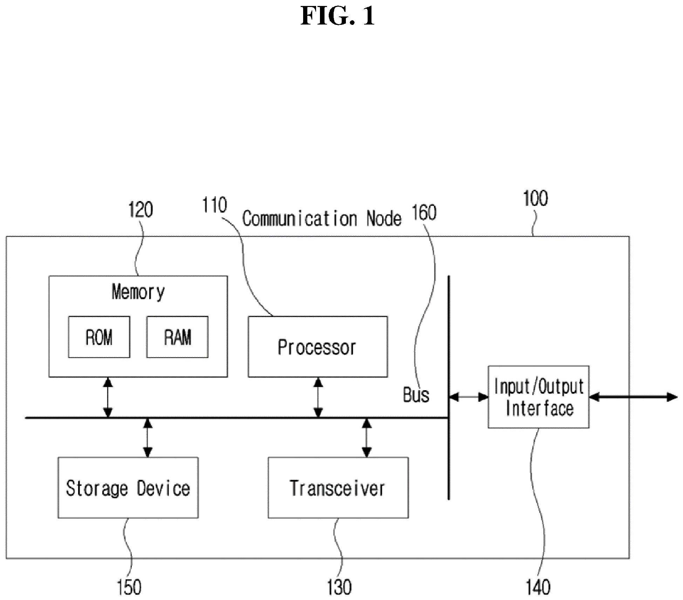

FIG. 1 is a diagram illustrating a communication node in a wireless LAN system to which the present disclosure is applied. Referring to FIG. 1, a communication node (100) may include at least one of a processor (110), a memory (120), a transceiver (130), an input/output interface (140), a storage device (150), and a bus (160). In an embodiment, the communication node (100) may be an access point (AP), a station (STA), an AP multi-link device (MLD), or a non-AP MLD. However, the communication node may not be limited thereto, and may be a node that communicates with other nodes or devices based on the aforementioned configuration. In an embodiment, an operating channel width supported by an AP may be 20 MHz (megahertz), 80 MHz, 160 MHz, or the like. An operating channel width supported by a station may be 20 MHz, 80 MHz, or the like. However, the present disclosure may not be limited thereto.

The processor (110) within the communication node (100) may control at least one of the memory (120), the transceiver (130), the input/output interface (140), and the storage device (150) as respective components within the communication node. The memory (120) within the communication node (100) may store information regarding instructions and directives executed by the processor (110), and the transceiver (130) may refer to a transceiver, a radio frequency (RF) unit, an RF module, or any other component that performs signal transmission and reception. The input/output interface (140) within the communication node (100) is an interface for input and output that may interoperate with other interfaces, and may further include a separate storage device (150). Each of the components within the communication node (100) may be connected via a bus (160) to communicate with one another.

However, in an embodiment, each of the components included in the communication node (100) may be connected not via a common bus (160), but via individual interfaces or individual buses centered around the processor (110). The processor (1110) may be connected to at least one of the memory (120), the transceiver (130), the input/output interface (140), and the storage device (150) via a dedicated interface.

The processor (110) may execute program commands stored in at least one of the memory (120) or the storage device (150). The processor (110) may refer to a central processing unit (CPU), a graphics processing unit (GPU), or a dedicated processor on which methods according to embodiments of the present disclosure are performed. Each of the memory (120) and the storage device (150) may be configured as at least one of a volatile storage medium or a non-volatile storage medium. In an embodiment, the memory (120) may be configured as at least one of a read only memory (ROM) or a random access memory (RAM).

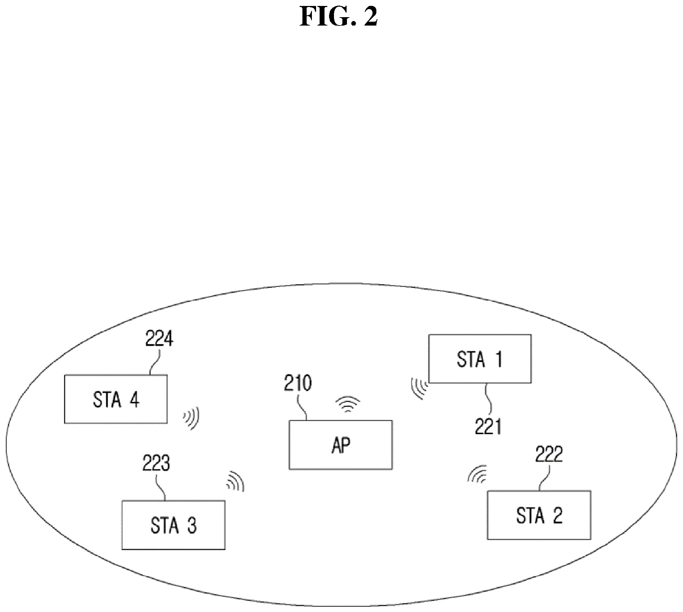

FIG. 2 is a diagram illustrating a wireless LAN system to which the present disclosure is applied. Referring to FIG. 2, a basic service set (BSS) of the wireless LAN system may include one AP (210) and a plurality of STAs (221, 222, 223, 224), and the plurality of STAs (221, 222, 223, 224) may be controlled by the AP (210). However, the wireless LAN system is not limited to a BSS, and an environment consisting only of STAs without a defined service set or AP may also be considered, and the wireless LAN system is not limited to any specific form. Each of the wireless devices within the wireless LAN system may include a medium access control (MAC) layer and a physical (PHY) layer, and communication between the wireless devices may be performed. In the following description, the AP and STA are primarily described for convenience of explanation, but the description may not be limited thereto. In an embodiment, the following may be equally applicable to other communication nodes or devices, and is not limited to any specific form.

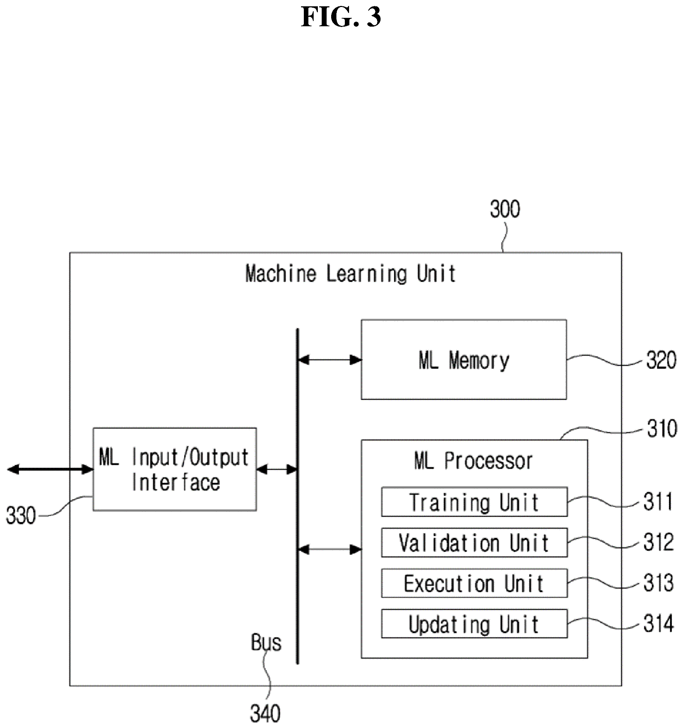

FIG. 3 is a diagram illustrating a machine learning unit to which the present disclosure is applied. Each of the wireless devices within the wireless LAN system may be connected to a machine learning unit (300). However, the present disclosure may not be limited thereto, and it may also be possible for a wireless device that is not connected to the machine learning unit (300) to operate.

In an embodiment, the processor (110) of the communication node (100) of FIG. 1 may be connected to the machine learning unit (300). The machine learning unit (900) may communicate with the processor (110) via the input/output interface (140) of the communication node (100). In another embodiment, the machine learning unit (300) may communicate with the processor (110) via the bus (160) of the communication node (100). In another embodiment, the machine learning unit (300) may be connected to and communicate with the processor (110) of the communication node (100) via an individual interface or a dedicated bus. The machine learning unit (300) may be connected to and communicate with the memory (120), the transceiver (130), and the storage device (140) via the input/output interface (140), the bus (160), or a dedicated bus of the communication node (100), but may not be limited to any specific form.

In an embodiment, the machine learning unit (300) may include at least one machine learning (ML) processor (310), an ML memory (320), an ML input/output interface (330), and ML buses (340). The ML processor (310), the ML memory (320), and the ML input/output interface (330) may be connected to and communicate with one another via the ML bus (340). In another embodiment, the ML processor (310) may be connected to and communicate with at least one of the ML memory (320) and the ML input/output interface (330) via a dedicated bus or interface. The ML processor (310) may be a central processing unit, a graphics processing unit, a dedicated processor on which methods according to embodiments of the present disclosure are performed, or a processor combining at least one of a central processing unit and a dedicated processor. The ML processor (310) may include at least one of a training unit (311), a validation unit (312), an execution unit (313), and an updating unit (313). The training unit (311), the validation unit (312), the execution unit (313), and the updating unit (313) may be logical entities implemented in software or hardware processing devices. In an embodiment, the ML processor (310) may perform at least one of training, validation, execution, and updating of a machine learning model. The machine learning model may be in the form of a plurality of matrices or vectors. As a specific embodiment, the machine learning model may include weights, transition matrices, and hyperparameters that implement and train single or multiple combined machine learning algorithms (e.g. deep neural network (DNN), convolutional neural network (CNN), recurrent neural network (RNN), and deep reinforcement learning (DRL) algorithms). The machine learning model may include an input layer, at least one hidden layer, and an output layer to implement a DNN algorithm. Each of the input layer, the hidden layer, and the output layer may include at least one perceptron (e.g. an artificial neuron). A perceptron includes an activation function, input weights, and a bias. A plurality of perceptrons may have their inputs and outputs connected to form the input layer, the hidden layer, and the output layer. The machine learning model may include a convolution algorithm and the DNN algorithm to implement a CNN algorithm. The convolution algorithm is an algorithm that applies a kernel matrix to input data in matrix form via convolution, and may be performed at least once on the input data. When the convolution algorithm is performed on the input data, the size of the data may increase through concatenation or decrease through pooling. Input data on which the convolution algorithm has been performed at least once is used as input data for the DNN algorithm. In an embodiment, the machine learning model may include a DNN algorithm and a cell structure to implement an RNN algorithm. The cell structure may be a structure that memorizes previous input data and feeds it back as input, and may be used in at least one perceptron of the DNN algorithm. The machine learning model may include an agent, an environment structure, and a DNN algorithm to implement a DRL algorithm. In the DRL algorithm, the agent may observe the environment and perform an optimal action based thereon. The environment may provide feedback to the agent in the form of a reward based on the action of the agent. Based on the foregoing, the agent may learn a policy for taking optimal actions. The agent may use a DNN algorithm to learn optimal actions.

In another embodiment, the machine learning unit (300) may be designed to additionally implement other machine learning algorithms beyond those already implemented. To this end, the machine learning unit (300) may include additional components for implementing other machine learning algorithms. The ML memory (320) within the machine learning unit (300) may store machine learning models and machine learning algorithms. Implementation of a machine learning algorithm may be performed by the ML processor (310) based on the machine learning model.

In another embodiment, all or part of the functions of the machine learning unit (300) may be integrated into the processor (110) and the memory (120) of the communication node (100). That is, the processor (110) of the communication node (100) may perform some or all of the functions of the ML processor (310), and the memory (120) may perform all or some of the functions of the ML memory (320). When the processor (110) and the memory (120) of the communication node (100) perform all functions of the machine learning unit (300), the machine learning unit (300) may not be connected via the input/output interface (140), and the processor (110) and the memory (120) may operate as the machine learning unit (300).

In another embodiment, the machine learning unit (300) may not be connected via the input/output interface (140) of the communication node (100), but may be connected via the bus (160), or via a dedicated bus or interface centered around the processor (110) of the communication node (100), but the present disclosure may not be limited to such embodiments.

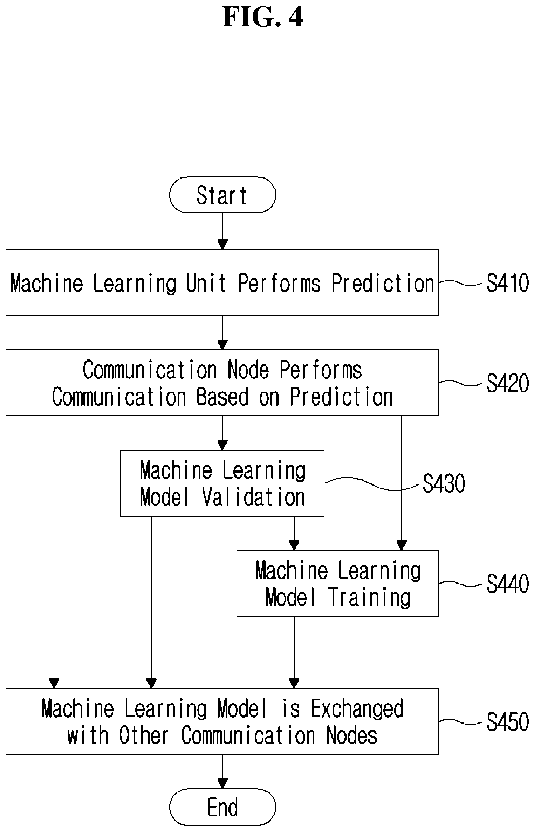

FIG. 4 is a flowchart illustrating a method of performing communication based on a machine learning unit to which the present disclosure is applied. Referring to FIG. 4, the machine learning unit (300) may be connected to the communication node (100) to collect communication data and perform prediction based on a machine learning model (S410). In an embodiment, the prediction may be performed by the execution unit (313) of the machine learning unit (300), but is not limited thereto. Here, the communication data collected by the machine learning unit (300) may include at least one of channel noise status, channel congestion, received signal strength, collision frequency, and other information obtained from the physical layer. In addition, the communication data may include information obtained from the MAC layer, and is not limited to any specific form. The communication data collected by the machine learning unit (300) may be provided as input to the machine learning model as-is. In another embodiment, the communication data collected by the machine learning unit (300) may be processed or pre-processed before being provided as input to the machine learning model. In an embodiment, the prediction result of the machine learning unit (300) may be at least one of physical layer and MAC parameters (e.g. modulation and coding scheme (MCS) parameters, beamforming parameters, enhanced distributed channel access (EDCA) parameters, etc.). In another embodiment, the prediction result of the machine learning unit (300) may be information for packet scheduling, multi-AP operation scheduling, and other scheduling, but is not limited to any specific form. In another embodiment, the communication node

(100) may receive all or part of a machine learning model from another communication node. All or part of the machine learning model may be collected by the machine learning unit (300), and is not limited to any specific form. In an embodiment, the communication node (100) may perform communication based on the prediction of the machine learning unit (300) (S420). In addition, the machine learning unit (300) may collect communication data based on the performed communication, and based thereon, machine learning model validation (S430) or machine learning model training (S440) may be performed. In addition, in an embodiment, the machine learning model may be exchanged with other communication nodes (S450), and the exchanged machine learning model information may be used for machine learning model validation or machine learning model training. In an embodiment, when machine learning model validation is performed, it may be verified whether the communication operation performed by the prediction of the machine learning unit (300) is appropriate. As a specific embodiment, machine learning model validation may be performed based on at least one of the frame collision frequency, transmission error frequency, and packet transmission delay of the communication node (100), and an operation of determining whether the communication performance of the communication node (100) has improved may be performed.

In addition, in an embodiment, when it is determined that training of the machine learning model is necessary (e.g. when communication performance has not improved, or when the performance of the machine learning model of another communication node (e.g. all or part of the machine learning model) is determined to be superior to the machine learning model of the current communication node (100)), the communication node (100) may perform machine learning model training. In another embodiment, the communication node (100) may exchange the machine learning model with other communication nodes without performing machine learning model validation or machine learning model training. In addition, in an embodiment, when it is determined that training of the machine learning model is not necessary, the communication node (100) may exchange the machine learning model with other communication nodes without performing machine learning model training.

Here, the training of the machine learning model may be performed based on at least one of the collected communication data and all or part of the machine learning model of another communication node. The training of the machine learning model may be performed by the training unit (311), and may be performed based on at least one of the collected communication data, the machine learning model of another communication node, and the output of the machine learning model of the communication node (100).

In another embodiment, all or part of the machine learning model of the communication node (1000) may be replaced with all or part of the machine learning model of another communication node by the updating unit (314) of the machine learning unit (300). In another embodiment, the machine learning model (e.g. all or part of the machine learning model) of the communication node (100) may be shared with other communication nodes. Alternatively, it may also be possible for the communication node (100) to operate based solely on machine learning model validation and training without exchanging the machine learning model with other communication nodes, and the present disclosure is not limited to any specific form. In an embodiment, in the flowchart of the present disclosure, at least one of reordering of steps, addition or removal of steps, and repetition of specific steps may be performed. That is, the present flowchart is one embodiment illustrating the operation of the machine learning unit (300) of the wireless communication node (100), and the procedures and operations may be variously modified. In an embodiment, it may also be possible for the machine learning model validation step to be performed again after machine learning model training in order to validate the trained machine learning model, and the present disclosure may not be limited to any specific form.

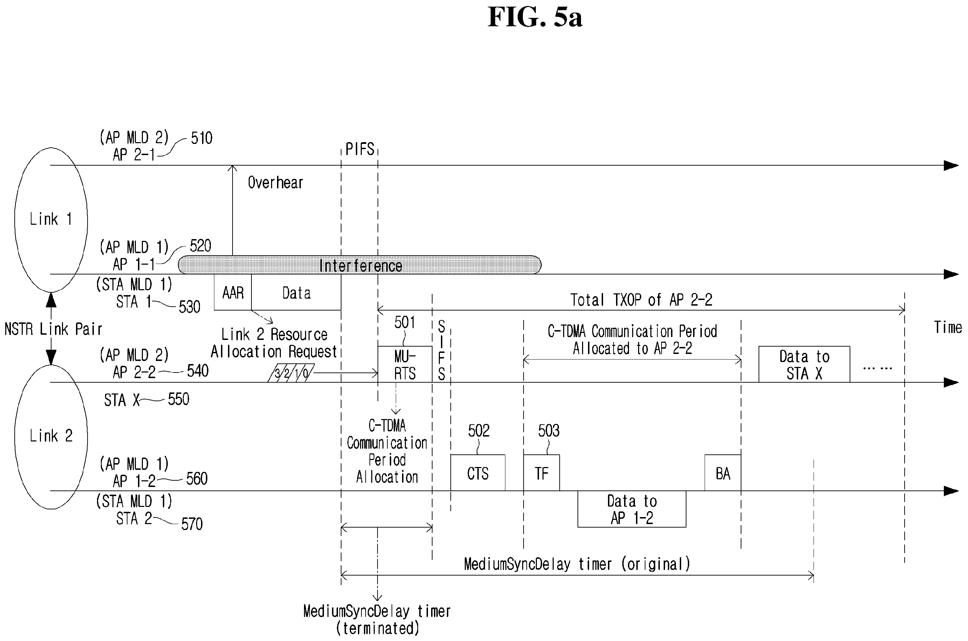

FIG. 5a through FIG. 5c are diagrams illustrating a method of allocating a coordinated time-division communication period in a multi-link wireless LAN network to which the present disclosure is applied.

Referring to FIG. 5a through FIG. 5c, multi-link operations may be performed in a wireless LAN network. FIG. 5a through FIG. 5c are merely examples for convenience of explanation and may not be limited thereto, and may be equally applicable in other situations. In an embodiment, a first link and a second link may exist, and a multi-link device (MLD) supporting multi-link operation may operate on the first link and the second link. A plurality of AP MLDs (e.g. AP MLD 1, AP MLD 2) may operate on the first link and the second link. In addition, a STA MLD (e.g. STA MLD 1) may operate on the first link and the second link. Here, the STA MLD may be referred to as a non-AP MLD. In an embodiment, an MLD may have independent medium access control (MAC) (e.g. lower MAC layer) and PHY entities per link, and an upper MAC (e.g. upper MAC layer) entity integrating the independent MAC layers per link may exist. In an embodiment, an MLD comprising independent MAC and PHY per link may include independent communication modules per link.

In the following description, the AP operating on the first link as AP MLD 1 is AP 1-1 of AP MLD 1, and the AP operating on the second link as AP MLD 1 is AP 1-2 of AP MLD 1. In addition, the AP operating on the first link as AP MLD 2 is AP 2-1 of AP MLD 2, and the AP operating on the second link as AP MLD 2 is AP 2-2 of AP MLD 2. In addition, the STA (non-AP STA) operating on the first link as STA MLD 1 is STA 1 of STA MLD 1, and the STA operating on the second link as STA MLD 1 is STA 2 of STA MLD 1. In an embodiment, STA MLD 1 may be associated with AP MLD 1. In addition, STA MLD 1 may be a non-simultaneous transmit and receive (NSTR) terminal. When STA MLD 1 performs transmission on one of the NSTR link pairs of STA MLD 1 (e.g. the first link and the second link) (e.g. the first link), STA MLD 1 may not be able to perform channel sensing and frame reception operations on the link on which transmission is not performed (e.g. the second link), and setting the network allocation vector (NAV) may also not be possible. Accordingly, medium synchronization of the link on which STA MLD 1 does not perform transmission may be released. In an embodiment, when STA MLD 1 performs a medium synchronization recovery operation, STA MLD 1 may not be able to perform transmission on the link on which transmission is not performed (e.g. the second link) for a certain period of time. Alternatively, when STA MLD 1 performs a medium synchronization recovery operation, a MediumSyncDelay timer that restricts transmission by STA MLD 1 may operate. That is, STA 2 of STA MLD 1 may not be able to transmit frames for a certain period of time, and accordingly, transmission delays may occur. In an embodiment, when the MediumSyncDelay timer is operating and STA MLD 1 is able to normally receive a frame, decode the received frame, and normally set the NAV, the MediumSyncDelay timer may be released by STA MLD 1.

STA 1 (530) of STA MLD 1 may transmit a multi-link resource allocation request included in a data frame to AP 1-1 (520) of AP MLD 1 on the first link. The multi-link resource allocation request may be an AP assistance request (AAR). In an embodiment, the AAR may be included in an A-control format in the HT control field of the MAC header of the data frame and transmitted, but may not be limited thereto. The AAR may include an indicator requesting resource allocation on the second link (e.g. a link bitmap). The AAR may be used to request release of the MediumSyncDelay timer on the multi-link and to facilitate rapid uplink transmission. The resource allocation may include uplink transmission resource allocation. The uplink resource allocation may be allocated through a trigger frame or other frames.

In an embodiment, AP 1-1 (520) of AP MLD 1 may not be able to receive the data frame transmitted by STA 1 (530) of STA MLD 1 to AP 1-1 (520) of AP MLD 1 due to communication interference occurring at AP 1-1 (520) of AP MLD 1. The communication interference occurring at AP 1-1 (520) of AP MLD 1 may be caused by internal communication of AP 1-1 (520) of AP MLD 1 (e.g. heterogeneous communication or peer-to-peer (P2P) communication of AP 1-1 (520) of AP MLD 1) or communication of an overlapping BSS (OBSS) within the communication range of AP 1-1 (520) of AP MLD 1. However, the cause of communication interference is not specifically limited, and the cause of communication interference at AP 1-1 (520) of AP MLD 1 may take various forms beyond the aforementioned causes.

When AP 1-1 (520) of AP MLD 1 is unable to receive the data frame transmitted by STA 1 (530) of STA MLD 1 due to communication interference, AP 1-1 (520) of AP MLD 1 may also not be able to receive the AAR transmitted by STA 1 (530) of STA MLD 1. On the other hand, since AP 2-1 (510) of AP MLD 2 operates on the first link, which is the same link as AP 1-1 (520) of AP MLD 1 and STA 1 (530) of STA MLD 1, AP 2-1 (510) of AP MLD 2 may be able to receive the data frame transmitted by STA 1 (530) of STA MLD 1 and the AAR included in the data frame. Here, the APs of AP MLD 1 and the APs of AP MLD 2 may be APs included in the same multi-AP (MAP) group. In addition, in an embodiment, STA 1 of STA MLD 1 may not be a STA associated with AP MLD 2. Accordingly, AP 2-1 (510) of AP MLD 2 may receive the data frame transmitted by STA 1 (530) of STA MLD 1 and the AAR included in the data frame by overhearing. That is, AP MLD 2 may receive and confirm the content of a frame from STA MLD 1 that is not connected to AP MLD 2. AP MLD 2 may verify the indicator included in the AAR transmitted by STA 1 (530) of STA MLD 1 (e.g. an indicator requesting resources on the second link).

Referring to FIG. 5a, AP 2-1 (510) of AP MLD 2 may wait to verify whether AP 1-1 (520) of AP MLD 1 responds to the data frame transmitted by STA 1 (530) of STA MLD 1. In an embodiment, the waiting time for verifying whether AP 2-1 (510) of AP MLD 2 waits as described above may be longer than a short interframe space (SIFS) duration. As a specific embodiment, the waiting time may be a priority interframe space (PIFS), but may not be limited thereto. In an embodiment, the waiting time may be the time during which AP 1-1 (520) of AP MLD 1 waits to transmit a response frame to the frame transmitted by STA 1 (530) of STA MLD 1. Alternatively, the waiting time may be the time during which AP 1-1 (520) of AP MLD 1 waits for STA 1 (530) of STA MLD 1 to retransmit a frame when frame transmission to AP 1-1 (520) of AP MLD 1 has failed. When AP 1-1 (520) of AP MLD 1 does not respond to STA 1 (530) of STA MLD 1 until the waiting time (e.g. PIFS) elapses, or when STA 1 (530) of STA MLD 1 does not retransmit the data frame to AP 1-1 (520) of AP MLD 1, AP MLD 2 may transmit a frame for allocating resources on the second link. Here, AP 2-1 (540) of AP MLD 2 may be aware of whether STA 1 (530) of STA MLD 1 has established a TXOP prior to the transmission of the data frame transmitted by STA 1 (530) of STA MLD 1. That is, AP 2-1 (540) of AP MLD 2 may wait for a PIFS duration when the data frame transmitted by STA 1 (530) of STA MLD 1 is the first frame transmitted after contention.

AP 2-2 (540) of AP MLD 2 may perform a channel access operation (e.g. an enhanced distributed channel access (EDCA) backoff operation and an EDCA transmission opportunity (TXOP) acquisition procedure) to transmit a frame. In an embodiment, the EDCA backoff counter of AP 2-2 (540) of AP MLD 2 may have already reached 0 before transmitting the frame for allocating resources. Here, AP 2-2 (540) of AP MLD 2 may wait without transmitting the frame for allocating resources even though the backoff counter has reached 0, until a PIFS duration elapses from the end of the data frame transmitted by STA 1 (530) of STA MLD 1 on the first link. When a PIFS duration or longer has elapsed from the end of the data frame transmitted by STA 1 (530) of STA MLD 1, AP 2-2 (540) of AP MLD 2 may transmit a frame (501) for allocating resources. In another embodiment, when the EDCA backoff counter is not 0, AP 2-2 (540) of AP MLD 2 may perform the channel access operation until the EDCA backoff counter reaches 0. AP 2-2 (540) of AP MLD 2 may transmit the frame for allocating resources at the slot boundary at which the EDCA backoff counter reaches 0. The frame transmitted by AP 2-2 (540) of AP MLD 2 to allocate resources on the second link may be a multi-user request to send (MU-RTS) trigger frame (MU-RTS frame, 501). AP 2-2 (540) of AP MLD 2 may acquire a transmission opportunity (TXOP) on the second link by transmitting the MU-RTS frame (501) on the second link. In addition, in an embodiment, AP 2-2 (540) of AP MLD 2 may transmit a CTS-to-Self frame, which is a CTS frame wherein the receiver address (RA) is set to AP 2-2 (540) of AP MLD 2, to acquire a TXOP, and then transmit the MU-RTS frame (501) after a SIFS duration. The MU-RTS frame (501) transmitted by AP 2-2 (540) of AP MLD 2 may be a frame for allocating a communication period in a coordinated time division multiple access (C-TDMA) operation. AP 2-2 (540) of AP MLD 2 may allocate a C-TDMA communication period to another AP within the TXOP. The MU-RTS frame (501) transmitted by AP 2-2 (540) of AP MLD 2 may include information allocating the C-TDMA communication period to AP 1-2 (560) of AP MLD 1 (e.g. all or part of a MAC address identifying AP MLD 1 or a subordinate AP, a multi-AP group ID, or a pre-designated association identifier (AID)). Alternatively, the MU-RTS frame (501) described above may include information for indicating resource allocation to STA 2 (570) of STA MLD 1 (e.g. an AID or all or part of a MAC address identifying STA MLD 1 and subordinate STAs). That is, the MU-RTS frame (501) allocates resources to AP 1-2 (560) of AP MLD 1 through the coordinated time-division communication operation, and AP 1-2 (560) of AP MLD 1 is to allocate resources to STA 2 (570) of STA MLD 1. Information indicating AP 1-2 (560) of AP MLD 1 or STA 2 (570) of STA MLD 1 may be included in the user information field of the MU-RTS frame (501). That is, the MU-RTS frame (501) may indicate that the C-TDMA communication period is allocated to AP 1-2 (560) of AP MLD 1. The communication period allocated to AP 1-2 (560) of AP MLD 1 may indicate that it is to be used for uplink resource allocation for STA 2 (570) of STA MLD 1. AP 1-2 (560) of AP MLD 1 may receive the MU-RTS frame (501) transmitted from AP 2-2 (540) of AP MLD 2, and may transmit a clear to send (CTS) frame (502) as a response after a short interframe space (SIFS) duration. AP 1-2 (560) of AP MLD 1 may transmit a trigger frame (TF, 503) after a SIFS duration following the transmission of the CTS frame (502). The trigger frame (503) may include at least one user information field, and the user information field may include information identifying STA 2 (570) of STA MLD 1 (e.g. the AID of STA MLD 1). The trigger frame is a frame that allocates uplink resources. That is, STA 2 (570) of STA MLD 1 operating on the second link as STA MLD 1 may receive uplink resource allocation based on the coordinated time-division communication operation. STA 2 (570) of STA MLD 1 may receive the trigger frame (502) of AP 1-2 (560) of AP MLD 1, and may confirm the allocated resource information (e.g. uplink transmission bandwidth, transmission length, etc.) within the trigger frame (502). Thereafter, STA 2 (570) of STA MLD 1 may transmit an uplink frame to AP 1-2 (560) of AP MLD 1 based on the resource information allocated in the trigger frame (502). AP 1-2 (560) of AP MLD 1 may transmit a response frame (e.g. a BlockAck frame) to the uplink frame transmitted by STA 2 (570) of STA MLD 1. Thereafter, the C-TDMA communication period allocated by AP 2-2 (540) of AP MLD 2 to AP 1-2 (560) of AP MLD 1 may end. Here, the TXOP of AP 2-2 (540) of AP MLD 2 may remain, and AP 2-2 (540) of AP MLD 2 may allocate the remaining TXOP to another AP as a C-TDMA period, or may use it for communication with a STA connected to AP 2-2 (540) of AP MLD 2 (e.g. STA X (550)). The MediumSyncDelay timer of STA 2 (570) of STA MLD 1 may be terminated early when at least one of the MU-RTS frame (501) of AP 2-2 (540) of AP MLD 2, the CTS frame (502) of AP 1-2 (560) of AP MLD 1, and the trigger frame (503) of AP 1-2 (560) of AP MLD 1 is normally received.

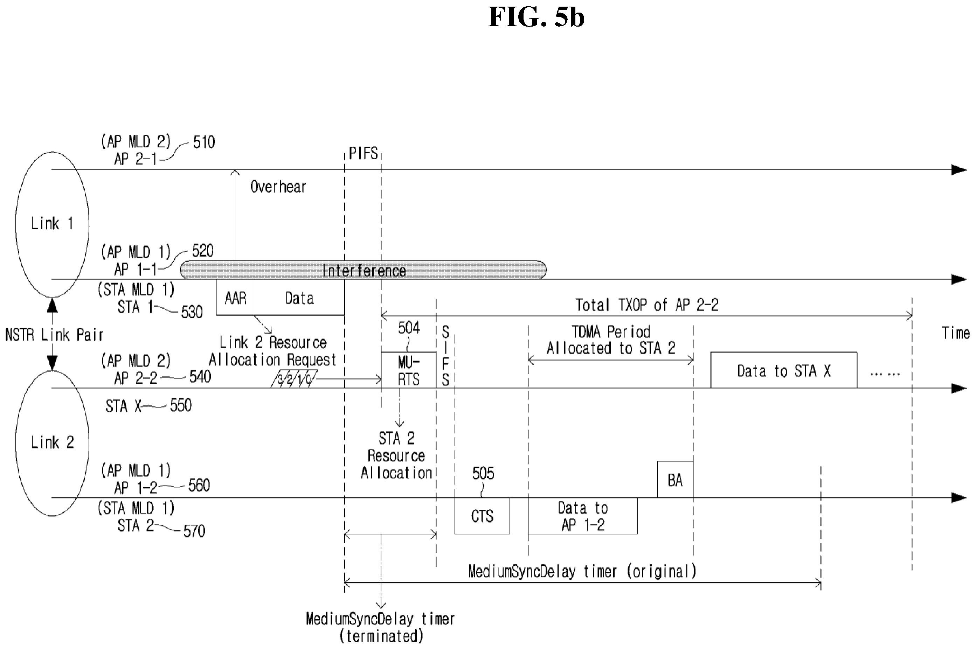

Referring to FIG. 5b, AP 2-1 (510) of AP MLD 2 may wait to verify whether AP 1-1 (520) of AP MLD 1 responds to the data frame transmitted by STA 1 (530) of STA MLD 1. In an embodiment, the waiting time for verifying whether AP 2-1 (510) of AP MLD 2 waits as described above may be longer than a SIFS duration. As a specific embodiment, the waiting time may be a PIFS, but may not be limited thereto. The waiting time is the time during which AP 1-1 (520) of AP MLD 1 waits to transmit a response frame to the frame transmitted by STA 1 (530) of STA MLD 1. Alternatively, the waiting time may be the time during which AP 1-1 (520) of AP MLD 1 waits for STA 1 (530) of STA MLD 1 to retransmit a frame when frame transmission to AP 1-1 (520) of AP MLD 1 has failed. When AP 1-1 (520) of AP MLD 1 does not respond to STA 1 (530) of STA MLD 1 until the waiting time (e.g. PIFS) elapses, or when STA 1 (530) of STA MLD 1 does not retransmit the data frame to AP 1-1 (520) of AP MLD 1, AP MLD 2 may transmit a frame for allocating resources on the second link. Here, AP 2-1 (540) of AP MLD 2 may be aware of whether STA 1 (530) of STA MLD 1 has established a TXOP prior to the transmission of the data frame transmitted by STA 1 (530) of STA MLD 1. That is, AP 2-1 (540) of AP MLD 2 may wait for a PIFS duration when the data frame transmitted by STA 1 (530) of STA MLD 1 is the first frame transmitted after contention.

AP 2-2 (540) of AP MLD 2 may perform a channel access operation (e.g. an EDCA backoff operation and an EDCA TXOP acquisition procedure) to transmit a frame. In an embodiment, the EDCA backoff counter of AP 2-2 (540) of AP MLD 2 may have already reached 0 before transmitting the frame for allocating resources. Here, AP 2-2 (540) of AP MLD 2 may wait without transmitting the frame for allocating resources even though the backoff counter has reached 0, until a PIFS duration elapses from the end of the data frame transmitted by STA 1 (530) of STA MLD 1 on the first link. When a PIFS duration or longer has elapsed from the end of the data frame transmitted by STA 1 (530) of STA MLD 1, AP 2-2 (540) of AP MLD 2 may transmit a frame (504) for allocating resources. In another embodiment, when the EDCA backoff counter is not 0, AP 2-2 (540) of AP MLD 2 may perform the channel access operation until the EDCA backoff counter reaches 0. AP 2-2 (540) of AP MLD 2 may transmit the frame for allocating resources at the slot boundary at which the EDCA backoff counter reaches 0. The frame transmitted by AP 2-2 (540) of AP MLD 2 to allocate resources on the second link may be a multi-user request to send (MU-RTS) trigger frame (MU-RTS frame, 504). AP 2-2 (540) of AP MLD 2 may acquire a TXOP on the second link by transmitting the MU-RTS frame (504) on the second link. In addition, in an embodiment, AP 2-2 (540) of AP MLD 2 may transmit a CTS-to-Self frame, which is a CTS frame wherein the receiver address (RA) is set to AP 2-2 (540) of AP MLD 2, to acquire a TXOP, and then transmit the MU-RTS frame (504) after a SIFS duration. The MU-RTS frame (504) transmitted by AP 2-2 (540) of AP MLD 2 may be a frame for allocating a communication period in a coordinated time division multiple access (C-TDMA) operation. AP 2-2 (540) of AP MLD 2 may allocate a C-TDMA communication period to another STA within the TXOP.

The MU-RTS frame (504) transmitted by AP 2-2 (540) of AP MLD 2 may include information allocating the C-TDMA communication period to STA 2 (570) of STA MLD 1 (e.g. all or part of a MAC address identifying STA MLD 1 or a subordinate STA, or an association identifier (AID)). That is, the MU-RTS frame (504) allocates resources to AP 1-2 (560) of AP MLD 1 through the coordinated time-division communication operation, and AP 1-2 (560) of AP MLD 1 is to allocate resources to STA 2 (570) of STA MLD 1. Information indicating STA 2 (570) of STA MLD 1 may be included in the user information field of the MU-RTS frame (504). That is, the MU-RTS frame (504) may indicate that the C-TDMA communication period is allocated to STA 2 (570) of STA MLD 1. The MU-RTS trigger frame (504) is a frame that allocates uplink resources. That is, STA 2 (570) of STA MLD 1 operating on the second link as STA MLD 1 may receive uplink resource allocation based on the coordinated time-division communication operation. STA 2 (570) of STA MLD 1 may receive the MU-RTS frame (504) transmitted by AP 2-2 (540) of AP MLD 2, and may transmit a clear to send (CTS) frame (505) as a response after a SIFS duration. STA 2 (570) of STA MLD 1 may transmit an uplink data frame to AP 1-2 (560) of AP MLD 1 within the allocated C-TDMA communication period after a SIFS duration following the transmission of the CTS frame (505). The C-TDMA communication period allocated by AP 2-2 (540) of AP MLD 2 to STA 2 (570) of STA MLD 1 may end.

Here, the TXOP of AP 2-2 (540) of AP MLD 2 may remain, and AP 2-2 (540) of AP MLD 2 may allocate the remaining TXOP to another AP as a C-TDMA period, or may use it for communication with a STA connected to AP 2-2 (540) of AP MLD 2 (e.g. STA X (550)). The MediumSyncDelay timer of STA 2 (570) of STA MLD 1 may be terminated early by the normally received MU-RTS frame (505) of AP 2-2 (540) of AP MLD 2.

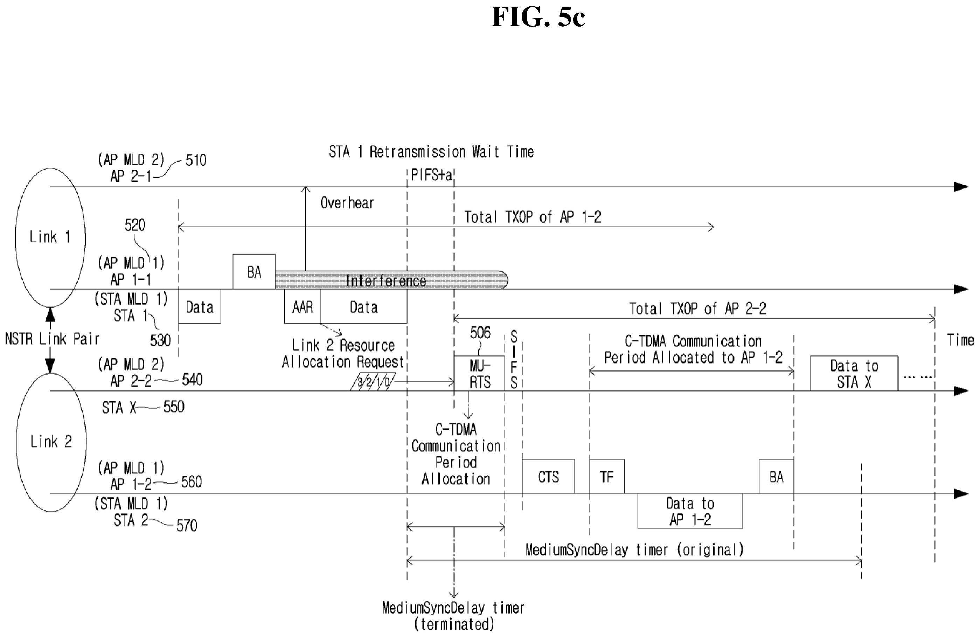

Referring to FIG. 5c, AP 2-1 (510) of AP MLD 2 may wait to verify whether AP 1-1 (520) of AP MLD 1 responds to the data frame transmitted by STA 1 (530) of STA MLD 1. In an embodiment, the waiting time for verifying whether AP 2-1 (510) of AP MLD 2 waits as described above may be longer than a SIFS duration. As a specific embodiment, the waiting time may be a PIFS, but may not be limited thereto. The waiting time is the time during which AP 1-1 (520) of AP MLD 1 waits to transmit a response frame to the frame transmitted by STA 1 (530) of STA MLD 1. Alternatively, the waiting time may be the time during which AP 1-1 (520) of AP MLD 1 waits for STA 1 (530) of STA MLD 1 to retransmit a frame when frame transmission to AP 1-1 (520) of AP MLD 1 has failed. When AP 1-1 (520) of AP MLD 1 does not respond to STA 1 (530) of STA MLD 1 until the waiting time (e.g. PIFS) elapses, or when STA 1 (530) of STA MLD 1 does not retransmit the data frame to AP 1-1 (520) of AP MLD 1, AP MLD 2 may transmit a frame for allocating resources on the second link. Here, AP 2-1 (540) of AP MLD 2 may be aware of whether STA 1 (530) of STA MLD 1 has established a TXOP prior to the transmission of the data frame transmitted by STA 1 (530) of STA MLD 1. That is, when the data frame transmitted by STA 1 (530) of STA MLD 1 is not the first frame transmitted after contention, AP 2-1 (510) of AP MLD 2 may need to consider whether STA 1 (530) of STA MLD 1 performs a retransmission. Alternatively, AP 2-1 (510) of AP MLD 2 may consider whether STA 1 (530) of STA MLD 1 performs a retransmission even when the data frame transmitted by STA 1 (530) of STA MLD 1 is the first frame transmitted after contention. The retransmission of STA 1 (530) of STA MLD 1 may be performed after a PIFS duration following the end of data frame transmission by STA 1 (530) of STA MLD 1. AP 2-1 (510) of AP MLD 2 may wait until an additional time 'a' after the PIFS duration from the end of data frame transmission by STA 1 (530) of STA MLD 1, in consideration of the retransmission of STA 1 (530) of STA MLD 1. In an embodiment, the 'a' duration may be aSlotTime or longer. When AP 2-1 (510) of AP MLD 2 detects the retransmission of STA 1 (530) of STA MLD 1 during the PIFS + 'a' duration, AP MLD 2 may not transmit the frame for allocating resources on the second link. Alternatively, AP MLD 2 may transmit the frame for allocating resources on the second link after a PIFS or PIFS + 'a' duration following the completion of the retransmission by STA 1 (530) of STA MLD 1. When AP 2-1 (510) of AP MLD 2 does not detect the retransmission of STA 1 (530) of STA MLD 1 during the PIFS + 'a' duration, AP MLD 2 may transmit the frame for allocating resources on the second link.

AP 2-2 (540) of AP MLD 2 may perform a channel access operation (e.g. an EDCA backoff operation and an EDCA TXOP acquisition procedure) to transmit a frame. In an embodiment, the EDCA backoff counter of AP 2-2 (540) of AP MLD 2 may have already reached 0 before transmitting the frame for allocating resources. Here, AP 2-2 (540) of AP MLD 2 may wait without transmitting the frame for allocating resources even though the backoff counter has reached 0, until a PIFS duration elapses from the end of the data frame transmitted by STA 1 (530) of STA MLD 1 on the first link. When a PIFS duration or longer has elapsed from the end of the data frame transmitted by STA 1 (530) of STA MLD 1, AP 2-2 (540) of AP MLD 2 may transmit a frame (506) for allocating resources. In another embodiment, when the EDCA backoff counter is not 0, AP 2-2 (540) of AP MLD 2 may perform the channel access operation until the EDCA backoff counter reaches 0. AP 2-2 (540) of AP MLD 2 may transmit the frame (506) for allocating resources at the slot boundary at which the EDCA backoff counter reaches 0. In an embodiment, the frame (506) for allocating resources transmitted by AP 2-2 (540) of AP MLD 2 in FIG. 3c may be a frame for allocating resources to AP 2-1 (510) of AP MLD 2 as in FIG. 3a, or may be a frame for allocating resources to STA 2 (570) of STA MLD 1 as in FIG. 3b, and may not be limited to any specific form.

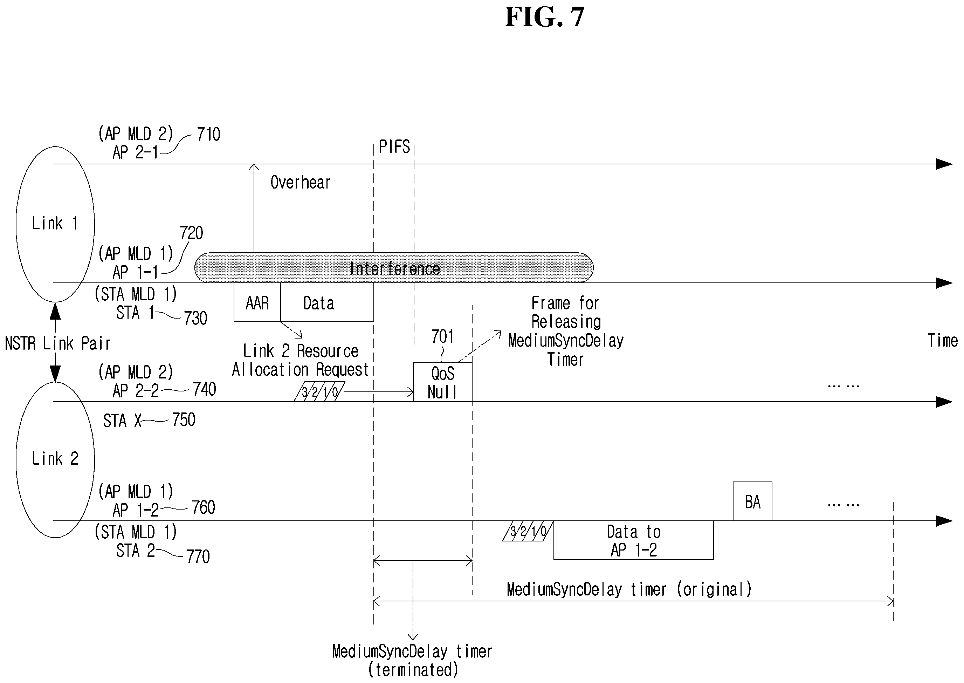

In FIG. 5a through FIG. 5c, the machine learning algorithm and machine learning unit operations illustrated in FIG. 1 through FIG. 4 may be used by AP 2-2 (540) of AP MLD 2 to allocate a C-TDMA communication period. In an embodiment, the machine learning unit of AP 2-2 (540) of AP MLD 2 may use the signal strength of AP 2-1 (510) of AP MLD 2 and STA 2, and the maximum TXOP length of AP 2-2 (540) of AP MLD 2 for C-TDMA communication period allocation. The machine learning unit of AP 2-2 (540) of AP MLD 2 may determine whether to allocate C-TDMA resources to AP 2-1 (510) of AP MLD 2 or to STA 2 (570) of STA MLD 1. The machine learning unit of AP 2-2 (540) of AP MLD 2 may further determine the C-TDMA communication period allocation length. AP 2-2 (540) of AP MLD 2 may determine the optimal C-TDMA communication period allocation target as an AP or STA based on the determination of the machine learning unit, and may determine the communication period. Accordingly, C-TDMA operations may proceed efficiently. When AP 2-2 (540) of AP MLD 2 determines that C-TDMA communication period allocation is unnecessary, AP 2-2 (540) of AP MLD 2 may perform a frame transmission operation solely for releasing the MediumSyncDelay timer of the STA MLD without separately allocating a communication period and resources, as in the embodiment related to FIG. 7 described below, and may not be limited to any specific form.

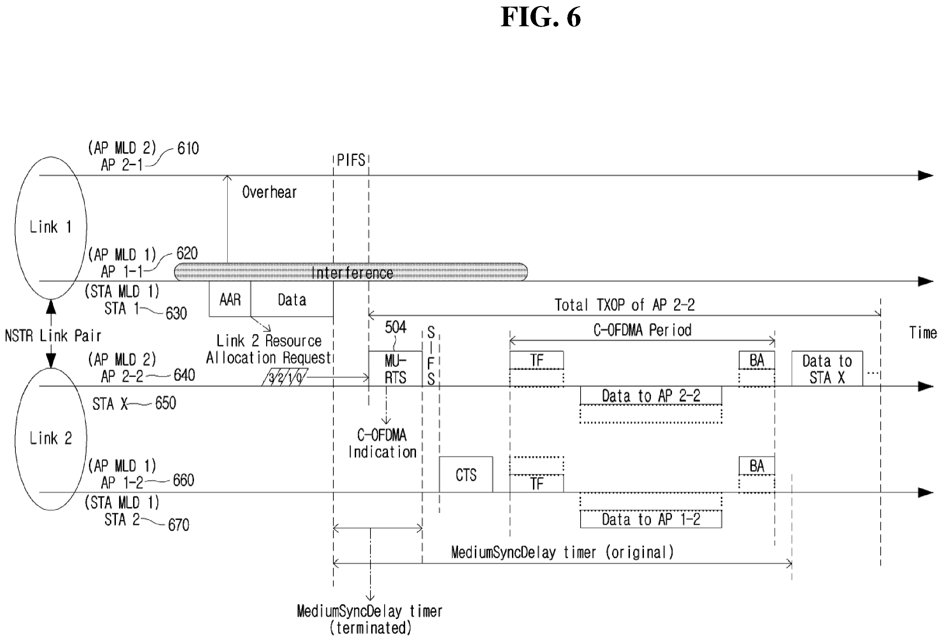

FIG. 6 is a diagram illustrating a method of allocating coordinated orthogonal frequency division multiple access resources in a multi-link wireless LAN network to which the present disclosure is applied.

Referring to FIG. 6, multi-link operations may be performed in a wireless LAN network. FIG. 6 is merely an example for convenience of explanation and may not be limited thereto, and may be equally applicable in other situations. In an embodiment, a first link and a second link may exist, and a multi-link device (MLD) supporting multi-link operation may operate on the first link and the second link. A plurality of AP MLDs (e.g. AP MLD 1, AP MLD 2) may operate on the first link and the second link. In addition, a STA MLD (e.g. STA MLD 1) may operate on the first link and the second link. Here, the STA MLD may be referred to as a non-AP MLD. In an embodiment, an MLD may have independent medium access control (MAC) (e.g. lower MAC layer) and PHY entities per link, and an upper MAC (e.g. upper MAC layer) entity integrating the independent MAC layers per link may exist. In an embodiment, an MLD comprising independent MAC and PHY per link may include independent communication modules per link.

In the following description, the AP operating on the first link as AP MLD 1 is AP 1-1 of AP MLD 1, and the AP operating on the second link as AP MLD 1 is AP 1-2 of AP MLD 1. In addition, the AP operating on the first link as AP MLD 2 is AP 2-1 of AP MLD 2, and the AP operating on the second link as AP MLD 2 is AP 2-2 of AP MLD 2. In addition, the STA (non-AP STA) operating on the first link as STA MLD 1 is STA 1 of STA MLD 1, and the STA operating on the second link as STA MLD 1 is STA 2 of STA MLD 1. In an embodiment, STA MLD 1 may be associated with AP MLD 1. In addition, STA MLD 1 may be a non-simultaneous transmit and receive (NSTR) terminal. When STA MLD 1 performs transmission on one of the NSTR link pairs of STA MLD 1 (e.g. the first link and the second link) (e.g. the first link), STA MLD 1 may not be able to perform channel sensing and frame reception operations on the link on which transmission is not performed (e.g. the second link), and setting the network allocation vector (NAV) may also not be possible. Accordingly, medium synchronization of the link on which STA MLD 1 does not perform transmission may be released. In an embodiment, when STA MLD 1 performs a medium synchronization recovery operation, STA MLD 1 may not be able to perform transmission on the link on which transmission is not performed (e.g. the second link) for a certain period of time. Alternatively, when STA MLD 1 performs a medium synchronization recovery operation, a MediumSyncDelay timer that restricts transmission by STA MLD 1 may operate. That is, STA 2 of STA MLD 1 may not be able to transmit frames for a certain period of time, and accordingly, transmission delays may occur. In an embodiment, when the MediumSyncDelay timer is operating and STA MLD 1 is able to normally receive a frame, decode the received frame, and normally set the NAV, the MediumSyncDelay timer may be released by STA MLD 1.

STA 1 (630) of STA MLD 1 may transmit a multi-link resource allocation request included in a data frame to AP 1-1 (620) of AP MLD 1 on the first link. The multi-link resource allocation request may be an AP assistance request (AAR). In an embodiment, the AAR may be included in an A-control format in the HT control field of the MAC header of the data frame and transmitted, but may not be limited thereto. The AAR may include an indicator requesting resource allocation on the second link (e.g. a link bitmap). The AAR may be used to request release of the MediumSyncDelay timer on the multi-link and to facilitate rapid uplink transmission. The resource allocation may include uplink transmission resource allocation. The uplink resource allocation may be allocated through a trigger frame or other frames.

In an embodiment, AP 1-1 (620) of AP MLD 1 may not be able to receive the data frame transmitted by STA 1 (630) of STA MLD 1 to AP 1-1 (620) of AP MLD 1 due to communication interference occurring at AP 1-1 (620) of AP MLD 1. The communication interference occurring at AP 1-1 (620) of AP MLD 1 may be caused by internal communication of AP 1-1 (620) of AP MLD 1 (e.g. heterogeneous communication or peer-to-peer (P2P) communication of AP 1-1 (620) of AP MLD 1) or communication of an overlapping BSS (OBSS) within the communication range of AP 1-1 (620) of AP MLD 1. However, the cause of communication interference is not specifically limited, and the cause of communication interference at AP 1-1 (620) of AP MLD 1 may take various forms beyond the aforementioned causes.

When AP 1-1 (620) of AP MLD 1 is unable to receive the data frame transmitted by STA 1 (630) of STA MLD 1 due to communication interference, AP 1-1 (620) of AP MLD 1 may also not be able to receive the AAR transmitted by STA 1 (630) of STA MLD 1. On the other hand, since AP 2-1 (610) of AP MLD 2 operates on the first link, which is the same link as AP 1-1 (620) of AP MLD 1 and STA 1 (630) of STA MLD 1, AP 2-1 (610) of AP MLD 2 may be able to receive the data frame transmitted by STA 1 (630) of STA MLD 1 and the AAR included in the data frame. Here, the APs of AP MLD 1 and the APs of AP MLD 2 may be APs included in the same multi-AP (MAP) group. In addition, in an embodiment, STA 1 of STA MLD 1 may not be a STA associated with AP MLD 2. Accordingly, AP 2-1 (610) of AP MLD 2 may receive the data frame transmitted by STA 1 (630) of STA MLD 1 and the AAR included in the data frame by overhearing. That is, AP MLD 2 may receive and confirm the content of a frame from STA MLD 1 that is not connected to AP MLD 2. AP MLD 2 may verify the indicator included in the AAR transmitted by STA 1 (630) of STA MLD 1 (e.g. an indicator requesting resources on the second link).

AP 2-1 (610) of AP MLD 2 may wait to verify whether AP 1-1 (620) of AP MLD 1 responds to the data frame transmitted by STA 1 (630) of STA MLD 1. In an embodiment, the waiting time for verifying whether AP 2-1 (610) of AP MLD 2 waits as described above may be longer than a SIFS duration. As a specific embodiment, the waiting time may be a PIFS, but may not be limited thereto. The waiting time is the time during which AP 1-1 (620) of AP MLD 1 waits to transmit a response frame to the frame transmitted by STA 1 (630) of STA MLD 1. Alternatively, the waiting time may be the time during which AP 1-1 (620) of AP MLD 1 waits for STA 1 (630) of STA MLD 1 to retransmit a frame when frame transmission to AP 1-1 (620) of AP MLD 1 has failed. When AP 1-1 (620) of AP MLD 1 does not respond to STA 1 (630) of STA MLD 1 until the waiting time (e.g. PIFS) elapses, or when STA 1 (630) of STA MLD 1 does not retransmit the data frame to AP 1-1 (620) of AP MLD 1, AP MLD 2 may transmit a frame for allocating resources on the second link.

AP 2-1 (610) of AP MLD 2 may wait until an additional time 'a' after the PIFS duration from the end of data frame transmission by STA 1 (630) of STA MLD 1, in consideration of the retransmission of STA 1 (630) of STA MLD 1. In an embodiment, the 'a' duration may be aSlotTime or longer. When AP 2-1 (510) of AP MLD 2 detects the retransmission of STA 1 (630) of STA MLD 1 during the PIFS + 'a' duration, AP MLD 2 may not transmit the frame for allocating resources on the second link. Alternatively, AP MLD 2 may transmit the frame for allocating resources on the second link after a PIFS or PIFS + 'a' duration following the completion of the retransmission by STA 1 (630) of STA MLD 1. When AP 2-1 (610) of AP MLD 2 does not detect the retransmission of STA 1 (630) of STA MLD 1 during the PIFS + 'a' duration, AP MLD 2 may transmit the frame for allocating resources on the second link.

AP 2-2 (640) of AP MLD 2 may perform a channel access operation (e.g. an enhanced distributed channel access (EDCA) backoff operation and an EDCA transmission opportunity (TXOP) acquisition procedure) to transmit a frame. In an embodiment, the EDCA backoff counter of AP 2-2 (640) of AP MLD 2 may have already reached 0 before transmitting the frame for allocating resources. Here, AP 2-2 (640) of AP MLD 2 may wait without transmitting the frame for allocating resources even though the backoff counter has reached 0, until a PIFS duration elapses from the end of the data frame transmitted by STA 1 (630) of STA MLD 1 on the first link. When a PIFS duration or longer has elapsed from the end of the data frame transmitted by STA 1 (630) of STA MLD 1, AP 2-2 (640) of AP MLD 2 may transmit the frame for allocating resources. In another embodiment, when the EDCA backoff counter is not 0, AP 2-2 (640) of AP MLD 2 may perform the channel access operation until the EDCA backoff counter reaches 0. AP 2-2 (640) of AP MLD 2 may transmit the frame for allocating resources at the slot boundary at which the EDCA backoff counter reaches 0.

The frame for allocating resources transmitted by AP 2-2 (640) of AP MLD 2 on the second link may be an MU-RTS trigger frame (MU-RTS frame, 601) or various types of trigger frames. AP 2-2 (640) of AP MLD 2 may acquire a transmission opportunity (TXOP) on the second link by transmitting the MU-RTS frame (601) on the second link. In an embodiment, the MU-RTS frame (601) transmitted by AP 2-2 (640) of AP MLD 2 may be a frame for allocating communication resources (e.g. communication frequency and time interval) in a coordinated orthogonal frequency division multiple access (C-OFDMA) operation. That is, AP 2-2 (640) of AP MLD 2 may allocate C-OFDMA communication resources to another AP within the TXOP. The MU-RTS frame (601) transmitted by AP 2-2 (640) of AP MLD 2 may include information allocating C-OFDMA communication resources to AP 1-2 (660) of AP MLD 2 (e.g. all or part of a MAC address identifying AP MLD 1 or a subordinate AP, a multi-AP group ID, or a pre-designated association identifier (AID)). In addition, the MU-RTS frame (601) may further include bandwidth information as C-OFDMA communication resources. In addition, in an embodiment, the MU-RTS frame (601) may include information for indicating resource allocation to STA 2 (570) of STA MLD 1 (e.g. an AID or all or part of a MAC address identifying STA MLD 1 and subordinate STAs). That is, the C-OFDMA communication resources included in the MU-RTS frame (601) may indicate allocation to AP 1-2 (660) of AP MLD 2, and the communication resources allocated to AP 1-2 (660) of AP MLD 2 may indicate that they are to be used for uplink resource allocation for STA 2 (570) of STA MLD 1. AP 1-2 (660) of AP MLD 2 may receive the MU-RTS frame (601) from AP 2-2 (640) of AP MLD 2, and may transmit a clear to send (CTS) frame (602) as a response after a short interframe space (SIFS) duration. Thereafter, AP 1-2 (660) of AP MLD 2 and AP 2-2 (640) of AP MLD 2 may transmit trigger frames (TF, 603-1, 603-2). Here, AP 1-2 (660) of AP MLD 2 and AP 2-2 (640) of AP MLD 2 may transmit the trigger frames (603-1, 603-2) on designated communication resources (frequencies). As a specific embodiment, when the second link has a bandwidth of 160 MHz, the trigger frames (603-1, 603-2) of AP 1-2 (660) of AP MLD 2 and AP 2-2 (640) of AP MLD 2 may each be transmitted on 80 MHz. At least one user information field of the trigger frame (603-2) transmitted by AP 1-2 (660) of AP MLD 2 may include information identifying STA 2 (570) of STA MLD 1 (e.g. the AID of STA MLD 1). STA 2 (570) of STA MLD 1 may receive the trigger frame (603-2) of AP 1-2 (660) of AP MLD 2, and may confirm the allocated resource information (e.g. uplink transmission bandwidth, transmission length, etc.) in the trigger frame (603-2). STA 2 (570) of STA MLD 1 may transmit an uplink frame to AP 1-2 (660) of AP MLD 2 through the resource information allocated in the trigger frame (603-2). AP 1-2 (660) of AP MLD 2 may transmit a response frame (e.g. a BlockAck frame) to the uplink frame transmitted by STA 2 (570) of STA MLD 1. In addition, the trigger frame (603-1) transmitted by AP 2-2 (640) of AP MLD 2 may include the user information field of STA X (650) connected to AP 2-2 (640) of AP MLD 2. STA X (650) may perform uplink frame transmission to AP 2-2 (640) of AP MLD 2, and AP 2-2 (640) of AP MLD 2 may transmit a response frame to STA X (660). That is, the trigger frame (603-2) is a frame that allocates uplink resources. That is, STA 2 (670) of STA MLD 1 operating on the second link as STA MLD 1 may receive uplink resource allocation based on the coordinated time-division communication operation.

The C-OFDMA resources allocated by AP 2-2 (640) of AP MLD 2 to AP 1-2 (660) of AP MLD 2 may end. The TXOP of AP 2-2 (640) of AP MLD 2 may remain, and AP 2-2 (640) of AP MLD 2 may allocate the remaining TXOP to another AP as a C-TDMA or C-OFDMA period. Alternatively, AP 2-2 (640) of AP MLD 2 may use the remaining TXOP for communication with a STA connected to AP 2-2 (640) of AP MLD 2 (e.g. STA X (650)). The MediumSyncDelay timer of STA 2 (570) of STA MLD 1 may be terminated early by at least one normally received frame among the MU-RTS frame (601) of AP 2-2 (640) of AP MLD 2, the CTS frame (602) of AP 1-2 (660) of AP MLD 2, and the trigger frame (603-2) of AP 1-2 (660) of AP MLD 2.

The machine learning algorithm and machine learning unit operations illustrated in FIG. 1 through FIG. 4 may be used by AP 2-2 (640) of AP MLD 2 to allocate C-OFDMA resources. In an embodiment, the machine learning unit of AP 2-2 (640) of AP MLD 2 may determine the maximum available channel bandwidth, optimal allocation frequency resources, and communication period for C-OFDMA resource allocation. Based on the determined resource information, AP 2-2 (640) of AP MLD 2 may allocate optimal frequency resources and a communication period to AP 1-2 (660) of AP MLD 2, and efficient communication resource allocation may be possible. In another embodiment, when AP 2-2 (640) of AP MLD 2 determines that C-OFDMA communication resource allocation is unnecessary, AP 2-2 (640) of AP MLD 2 may perform a frame transmission operation solely for releasing the MediumSyncDelay timer of the STA MLD without separately allocating a communication period and resources, as in FIG. 7 below.

FIG. 7 is a diagram illustrating a method of resolving a communication delay of a wireless LAN terminal in a multi-link wireless LAN network to which the present disclosure is applied.

Referring to FIG. 7, multi-link operations may be performed in a wireless LAN network. FIG. 7 is merely an example for convenience of explanation and may not be limited thereto, and may be equally applicable in other situations. In an embodiment, a first link and a second link may exist, and a multi-link device (MLD) supporting multi-link operation may operate on the first link and the second link. A plurality of AP MLDs (e.g. AP MLD 1, AP MLD 2) may operate on the first link and the second link. In addition, a STA MLD (e.g. STA MLD 1) may operate on the first link and the second link. Here, the STA MLD may be referred to as a non-AP MLD. In an embodiment, an MLD may have independent medium access control (MAC) (e.g. lower MAC layer) and PHY entities per link, and an upper MAC (e.g. upper MAC layer) entity integrating the independent MAC layers per link may exist. In an embodiment, an MLD comprising independent MAC and PHY per link may include independent communication modules per link.

In the following description, the AP operating on the first link as AP MLD 1 is AP 1-1 of AP MLD 1, and the AP operating on the second link as AP MLD 1 is AP 1-2 of AP MLD 1. In addition, the AP operating on the first link as AP MLD 2 is AP 2-1 of AP MLD 2, and the AP operating on the second link as AP MLD 2 is AP 2-2 of AP MLD 2. In addition, the STA (non-AP STA) operating on the first link as STA MLD 1 is STA 1 of STA MLD 1, and the STA operating on the second link as STA MLD 1 is STA 2 of STA MLD 1. In an embodiment, STA MLD 1 may be associated with AP MLD 1. In addition, STA MLD 1 may be a non-simultaneous transmit and receive (NSTR) terminal. When STA MLD 1 performs transmission on one of the NSTR link pairs of STA MLD 1 (e.g. the first link and the second link) (e.g. the first link), STA MLD 1 may not be able to perform channel sensing on the link on which transmission is not performed (e.g. the second link), and setting the network allocation vector (NAV) may also not be possible. Accordingly, medium synchronization of the link on which STA MLD 1 does not perform transmission may be released. In an embodiment, when STA MLD 1 performs a medium synchronization recovery operation, STA MLD 1 may not be able to perform transmission on the link on which transmission is not performed (e.g. the second link) for a certain period of time. Alternatively, when STA MLD 1 performs a medium synchronization recovery operation, a MediumSyncDelay timer that restricts transmission by STA MLD 1 may operate. That is, STA 2 of STA MLD 1 may not be able to transmit frames for a certain period of time, and accordingly, transmission delays may occur. In an embodiment, when the MediumSyncDelay timer is operating and STA MLD 1 is able to normally receive a frame, decode the received frame, and normally set the NAV, the MediumSyncDelay timer may be released by STA MLD 1.

STA 1 (730) of STA MLD 1 may transmit a multi-link resource allocation request included in a data frame to AP 1-1 (720) of AP MLD 1 on the first link. The multi-link resource allocation request may be an AP assistance request (AAR). In an embodiment, the AAR may be included in an A-control format in the HT control field of the MAC header of the data frame and transmitted, but may not be limited thereto. The AAR may include an indicator requesting resource allocation on the second link (e.g. a link bitmap). The AAR may be used to request release of the MediumSyncDelay timer on the multi-link and to facilitate rapid uplink transmission. The resource allocation may include uplink transmission resource allocation. The uplink resource allocation may be allocated through a trigger frame or other frames. Alternatively, the AAR may be used solely for requesting a frame for releasing the MediumSyncDelay timer on the multi-link.

In an embodiment, AP 1-1 (720) of AP MLD 1 may not be able to receive the data frame transmitted by STA 1 (730) of STA MLD 1 to AP 1-1 (720) of AP MLD 1 due to communication interference occurring at AP 1-1 (720) of AP MLD 1. The communication interference occurring at AP 1-1 (720) of AP MLD 1 may be caused by internal communication of AP 1-1 (720) of AP MLD 1 (e.g. heterogeneous communication or peer-to-peer (P2P) communication of AP 1-1 (720) of AP MLD 1) or communication of an overlapping BSS (OBSS) within the communication range of AP 1-1 (720) of AP MLD 1. However, the cause of communication interference is not specifically limited, and the cause of communication interference at AP 1-1 (720) of AP MLD 1 may take various forms beyond the aforementioned causes.

When AP 1-1 (720) of AP MLD 1 is unable to receive the data frame transmitted by STA 1 (730) of STA MLD 1 due to communication interference, AP 1-1 (720) of AP MLD 1 may also not be able to receive the AAR transmitted by STA 1 (730) of STA MLD 1. On the other hand, since AP 2-1 (710) of AP MLD 2 operates on the first link, which is the same link as AP 1-1 (720) of AP MLD 1 and STA 1 (730) of STA MLD 1, AP 2-1 (710) of AP MLD 2 may be able to receive the data frame transmitted by STA 1 (730) of STA MLD 1 and the AAR included in the data frame. Here, the APs of AP MLD 1 and the APs of AP MLD 2 may be APs included in the same multi-AP (MAP) group. In addition, in an embodiment, STA 1 of STA MLD 1 may not be a STA associated with AP MLD 2. Accordingly, AP 2-1 (710) of AP MLD 2 may receive the data frame transmitted by STA 1 (730) of STA MLD 1 and the AAR included in the data frame by overhearing. That is, AP MLD 2 may receive and confirm the content of a frame from STA MLD 1 that is not connected to AP MLD 2. AP MLD 2 may verify the indicator included in the AAR transmitted by STA 1 (730) of STA MLD 1 (e.g. an indicator requesting resources on the second link).

AP 2-1 (710) of AP MLD 2 may wait to verify whether AP 1-1 (720) of AP MLD 1 responds to the data frame transmitted by STA 1 (730) of STA MLD 1. In an embodiment, the waiting time for verifying whether AP 2-1 (710) of AP MLD 2 waits as described above may be longer than a SIFS duration. The waiting time is the time during which AP 1-1 (520) of AP MLD 1 waits to transmit a response frame to the frame transmitted by STA 1 (530) of STA MLD 1. Alternatively, the waiting time may be the time during which AP 1-1 (720) of AP MLD 1 waits for STA 1 (730) of STA MLD 1 to retransmit a frame when frame transmission to AP 1-1 (720) of AP MLD 1 has failed. As a specific embodiment, the waiting time may be a priority interframe space (PIFS), but may not be limited thereto. When AP 1-1 (720) of AP MLD 1 does not respond to STA 1 (730) of STA MLD 1 until the waiting time (e.g. PIFS) elapses, or when STA 1 (530) of STA MLD 1 does not retransmit the data frame to AP 1-1 (520) of AP MLD 1, AP MLD 2 may transmit a frame for releasing the MediumSyncDelay timer on the second link.

Alternatively, AP 2-1 (710) of AP MLD 2 may consider the retransmission performed after a PIFS duration from the end of data frame transmission by STA 1 (730) of STA MLD 1. AP 2-1 (710) of AP MLD 2 may wait for an additional time 'a' after the PIFS duration from the end of data frame transmission by STA 1 (730) of STA MLD 1. The 'a' duration may be aSlotTime or longer. When AP 2-1 (710) of AP MLD 2 does not detect the retransmission of STA 1 (730) of STA MLD 1 during the PIFS + 'a' duration, AP MLD 2 may transmit a frame for releasing the MediumSyncDelay timer on the second link. When AP 2-1 detects the retransmission of STA 1 during the PIFS + 'a' duration, AP MLD 2 may not transmit the frame for releasing the MediumSyncDelay timer on the second link. Alternatively, AP MLD 2 may transmit the frame for releasing the MediumSyncDelay timer after a PIFS or PIFS + 'a' duration from the end of the retransmission frame of STA 1 (730) of STA MLD 1.

AP 2-2 (740) of AP MLD 2 may perform a channel access operation (e.g. an enhanced distributed channel access (EDCA) backoff operation and an EDCA transmission opportunity (TXOP) acquisition procedure) to transmit a frame. In an embodiment, the EDCA backoff counter of AP 2-2 (740) of AP MLD 2 may have already reached 0 before transmitting the frame for releasing the synchronization delay timer. Here, AP 2-2 (740) of AP MLD 2 may wait without transmitting the frame for releasing the synchronization delay timer even though the backoff counter has reached 0, until a PIFS duration elapses from the end of the data frame transmitted by STA 1 (530) of STA MLD 1 on the first link. When a PIFS duration or longer has elapsed from the end of the data frame transmitted by STA 1 (730) of STA MLD 1, AP 2-2 (740) of AP MLD 2 may transmit the frame for releasing the synchronization delay timer. In another embodiment, when the EDCA backoff counter is not 0, AP 2-2 (740) of AP MLD 2 may perform the channel access operation until the EDCA backoff counter reaches 0. AP 2-2 (740) of AP MLD 2 transmits the frame for releasing the synchronization delay timer at the slot boundary at which the EDCA backoff counter reaches 0. In an embodiment, the frame for releasing the medium synchronization delay may be a data frame such as a quality of service (QoS) Null frame or QoS data. In another embodiment, the frame for releasing the medium synchronization delay may be various frames such as control frames and management frames. In FIG. 7, AP 2-2 (740) of AP MLD 2 may transmit a QoS Null frame (701) to STA 2 (770) of STA MLD 1 to release the medium synchronization delay, but this is for convenience of explanation only and is not limited to such an embodiment.

The MediumSyncDelay timer of STA 2 (770) of STA MLD 1 may be terminated when the QoS Null frame (701) of AP 2-2 (740) of AP MLD 2 is normally received. AP 2-2 (740) of AP MLD 2 may release the medium access synchronization timer to perform a channel access operation, and when the channel access operation is successful, may transmit an uplink frame to AP 1-2 (760) of AP MLD 2.

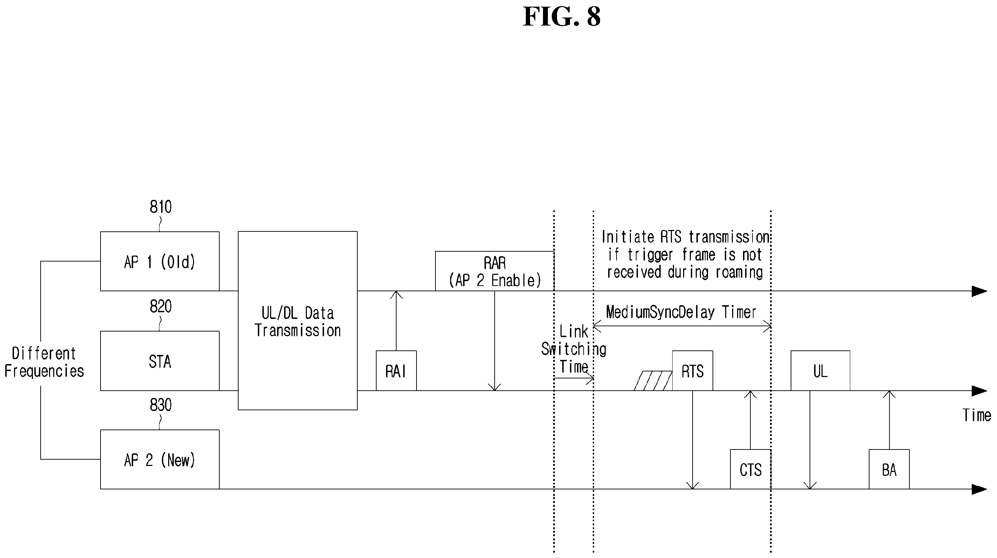

FIG. 8 is a diagram illustrating a method of verifying communication capability during wireless LAN roaming to which the present disclosure is applied.

Referring to FIG. 8, a wireless LAN terminal and a plurality of APs may operate. The wireless LAN terminal may be referred to as a non-AP station (STA) or STA. The plurality of APs may constitute one single mobility domain (SMD) AP multi-link device (MLD). The SMD AP MLD supports multi-link operation (MLO). In an embodiment, the plurality of APs may constitute an SMD AP MLD. The plurality of APs are non-collocated APs. Within the SMD AP MLD, the plurality of APs exchange control information. Each of the plurality of APs may constitute the MLD lower MAC sublayer of the SMD AP MLD, and a separate device or entity constituting the MLD upper MAC sublayer may exist above the plurality of APs. Alternatively, each of the plurality of APs may constitute both the MLD upper MAC sublayer and the MLD lower MAC sublayer, and the SMD AP MLD may be constituted in the form of a group of the plurality of APs. Each AP constituting the SMD AP MLD may constitute at least one link. In the present disclosure, for ease of explanation, each AP constituting the SMD AP MLD constitutes one link. However, it should be understood that each AP may constitute one or more links. A STA operating in connection with the SMD AP MLD is associated with at least one AP among the APs constituting the SMD AP MLD and performs communication. For ease of explanation, the SMD AP MLD may be referred to as an AP MLD. The links constituted by each AP may be configured on different frequencies. That is, each AP may operate on a different frequency.

A STA (820) may communicate with AP 1 (810) among the APs of the AP MLD. During communication with AP 1 (810), the STA (820) may determine that the communication quality of AP 1 (810) is poor. The STA (820) may search for APs and may discover AP 2 (830) belonging to the same AP MLD as AP 1 (810). The STA (820) may transmit a roaming announcement indication (RAI) frame including information on APs to which the STA (820) is attempting to roam, in an embodiment, the identifier of AP 2 (830) (e.g. link identified, MAC address). AP 1 (810) transmits a response frame (ACK frame or BlockAck (BA) frame) to STA (820) upon receiving the RAI frame from STA (820). AP 1 (810) transmits a roaming announcement response (RAR) frame to STA (820). The RAR frame may include information on APs to which STA (820) can roam (e.g. AP 2 (830)). The roaming-capable AP information indicated by the RAR frame may differ from the information on APs to which STA (820) is attempting to roam that is included in the RAI frame. The STA (820) transmits a response frame (ACK frame or BlockAck (BA) frame) to the AP upon receiving the RAI frame from AP 1 (810). As an alternative to the RAI frame and RAR frame, the RAI frame may not include information on APs to which STA (820) is attempting to roam, or the RAR frame may not include information on APs to which STA (820) is attempting to roam. The RAI frame may include AAR (AP assistance request) control information. A response frame to the RAR frame may include AAR control information. The AAR control information is control information included in an A-control format in the high throughput (HT) control field of the MAC header, and includes a link bitmap corresponding to the link to which STA (820) is attempting to roam. When STA (820) transmits a frame including AAR control information, STA (820) is rapidly requesting uplink resources on the link indicated by the link bitmap included in the AAR control information. When STA (820) transmits AAR control information, the communication delay of STA (820) caused by the inability to communicate during roaming is compensated. When AAR information is included in the response frame to the RAR frame, the response frame may be transmitted in the form of an aggregated MAC protocol data unit (A-MPDU) in which an ACK or BlockAck frame is concatenated with a QoS Null frame containing AAR control information in the MAC header. The STA (820) may start roaming immediately after exchanging the RAI frame and the RAR frame. One of the RAI frame and the RAR frame may be omitted. When one of the RAI frame and the RAR frame is omitted, STA (820) may start roaming immediately after transmitting the RAI frame or immediately after receiving the RAR frame. When the exchange of RAI frame and RAR frame between AP 1 (810) and STA (820) is completed and STA (820) starts roaming (or when one of the RAI frame or RAR frame is omitted and STA (820) starts roaming), STA (820) may switch links. The time for STA (820) to switch links is the time required for STA (820) to change frequency and communication parameters so as to be able to receive frames from another AP (e.g. AP 2 (830)) by changing the frequency. The link switching time may be a time pre-negotiated between STA (820) and the AP MLD. Alternatively, the link switching time may be included in the RAI frame transmitted by STA (820). When STA (820) performs enhanced multi-link single radio (EMLSR) operation, STA (820) may perform clear channel assessment (CCA) on the link on which AP 2 (830) operates after link switching, and upon receiving an initial control frame from AP 2 (830), may perform frame transmission and reception on the link. The initial control frame may be a multi-user request to send (MU-RTS) trigger frame or a buffer status report poll (BSRP) trigger frame.

Meanwhile, AP 1 (810) may indicate to the AP to which STA (820) is attempting to roam (AP 2 (830)) the expected roaming timing when STA (820) performs roaming. When STA (820) includes AAR control information in the RAI frame or a response frame to the RAI frame, AP 1 (810) may indicate to the AP that STA (820) is requesting uplink resources.

After switching links, STA (820) sets the MediumSyncDelay timer, which is a timer for correctly setting the NAV, because STA (820) was unable to set the network allocation vector (NAV) on the link on which AP 2 (830) operates. The STA (820) performs CCA operation until the MediumSyncDelay timer expires, and frame transmission may not be possible or only transmission of a request to send (RTS) frame may be possible. The STA (820) may release the MediumSyncDelay timer when a frame is correctly received. The STA (820) may also perform a channel access operation before the MediumSyncDelay timer expires. Since the MediumSyncDelay timer is operating, STA (820) may transmit an RTS frame to AP 2 (830) when the channel access operation is successful. Alternatively, even when the MediumSyncDelay timer is not operating in STA (820), the first frame transmitted by STA (820) upon roaming may be an RTS frame. The receiver address of the RTS frame of STA (820) may be set to the MAC address of the AP MLD (SMD AP MLD) to which AP 2 (830) belongs, instead of the MAC address of AP 2 (830). Setting the receiver address to the MAC address of the AP MLD indicates that AP 2 (830) is performing a roaming operation. AP 2 (830) responds with a CTS frame upon receiving the RTS frame from STA (820). When STA (820) receives the CTS frame from AP 2 (830), STA (820) releases the MediumSyncDelay and transmits an uplink frame to AP 2 (830). The uplink frame may be a frame in various formats, such as a PS-Poll frame, a data frame (QoS data frame), or a Null frame (QoS Null frame). The uplink frame of STA (820) may include context information of STA (820). The context information includes at least one of the uplink sequence number (SN) and packet number (PN) of STA (820). When AP 2 (830) responds to the RTS frame transmitted by STA (820) with a CTS frame, STA (820) and AP 2 (830) may perform data frame exchange. When STA (820) has requested uplink resources through AAR control information, AP 2 (830) may transmit a trigger frame to STA (820) to allocate uplink resources. When AP 2 (830) does not transmit a CTS frame, STA (820) shall not transmit additional frames during the MediumSyncDelay duration.

The machine learning unit and machine learning algorithm of FIG. 1 through FIG. 4 may be used by STA (820) to determine whether to perform a roaming operation. In an embodiment, the search by STA (820) for neighboring APs may be based on a determination by the machine learning unit. The input to the machine learning unit may include channel status and beacon information of neighboring APs, and the machine learning unit may determine whether roaming is necessary and select the most suitable target AP.

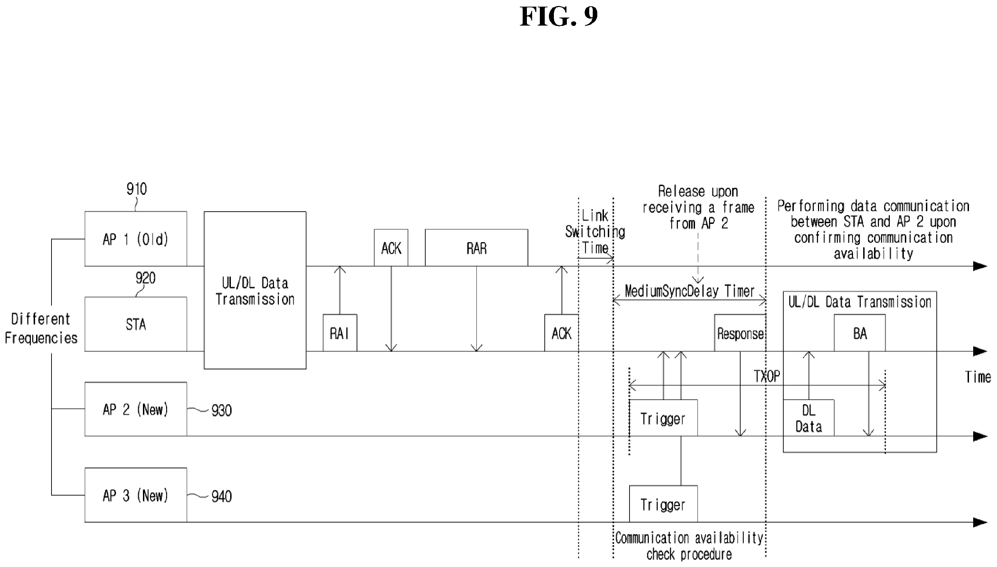

FIG. 9 is a diagram illustrating a method of verifying communication capability during wireless LAN roaming to which the present disclosure is applied.

Referring to FIG. 9, a wireless LAN terminal and a plurality of APs may operate. The wireless LAN terminal may be referred to as a non-AP station (STA) or STA. The plurality of APs may constitute one single mobility domain (SMD) AP multi-link device (MLD). The SMD AP MLD supports multi-link operation (MLO). In an embodiment, the plurality of APs may constitute an SMD AP MLD. The plurality of APs are non-collocated APs. Within the SMD AP MLD, the plurality of APs exchange control information. Each of the plurality of APs may constitute the MLD lower MAC sublayer of the SMD AP MLD, and a separate device or entity constituting the MLD upper MAC sublayer may exist above the plurality of APs. Alternatively, each of the plurality of APs may constitute both the MLD upper MAC sublayer and the MLD lower MAC sublayer, and the SMD AP MLD may be constituted in the form of a group of the plurality of APs. Each AP constituting the SMD AP MLD may constitute at least one link. In the present disclosure, for ease of explanation, each AP constituting the SMD AP MLD constitutes one link. However, it should be understood that each AP may constitute one or more links. A STA operating in connection with the SMD AP MLD is associated with at least one AP among the APs constituting the SMD AP MLD and performs communication. For ease of explanation, the SMD AP MLD may be referred to as an AP MLD. The links constituted by each AP may be configured on different frequencies. That is, each AP may operate on a different frequency.

A STA (920) may communicate with AP 1 (910) among the APs of the AP MLD. During communication with AP 1 (910), the STA (920) may determine that the communication quality of AP 1 (910) is poor. The STA (920) may search for APs and may discover AP 2 (930) and AP 3 (930) belonging to the same AP MLD as AP 1 (910). The STA (920) may transmit a roaming announcement indication (RAI) frame including information on APs to which STA (920) is attempting to roam (e.g. the identifiers of AP 2 (930) and AP 3 (930) (e.g. link ID(identified), MAC address)). AP 1 (910) transmits a response frame (ACK frame or BlockAck (BA) frame) to STA (920) upon receiving the RAI frame from STA (920). AP 1 (910) transmits a roaming announcement response (RAR) frame to STA (920). The RAR frame may include information on APs to which STA (920) can roam (e.g. AP 2 (930), AP 3 (930)). The roaming-capable AP information indicated by the RAR frame may differ from the information on APs to which STA (920) is attempting to roam that is included in the RAI frame. The STA (920) transmits a response frame (ACK frame or BlockAck (BA) frame) to the AP upon receiving the RAI frame from AP 1 (910). As an alternative to the RAI frame and RAR frame, the RAI frame may not include information on APs to which STA (920) is attempting to roam, or the RAR frame may not include information on APs to which STA (920) is attempting to roam. The RAI frame may include AAR (AP assistance request) control information. A response frame to the RAR frame may include AAR control information. The AAR control information is control information included in an A-control format in the high throughput (HT) control field of the MAC header, and includes a link bitmap corresponding to the link to which STA (920) is attempting to roam. When STA (920) transmits a frame including AAR control information, STA (920) is rapidly requesting uplink resources on the link indicated by the link bitmap included in the AAR control information. When STA (920) transmits AAR control information, the communication delay of STA (920) caused by the inability to communicate during roaming is compensated. When AAR information is included in the response frame to the RAR frame, the response frame may be transmitted in the form of an aggregated MAC protocol data unit (A-MPDU) in which an ACK or BlockAck frame is concatenated with a QoS Null frame containing AAR control information in the MAC header. The STA (920) may start roaming immediately after exchanging the RAI frame and the RAR frame. One of the RAI frame and the RAR frame may be omitted. When one of the RAI frame and the RAR frame is omitted, STA (920) may start roaming immediately after transmitting the RAI frame or immediately after receiving the RAR frame. When the exchange of RAI frame and RAR frame between AP 1 (910) and STA (920) is completed and STA (920) starts roaming (or when one of the RAI frame or RAR frame is omitted and STA (920) starts roaming), STA (920) may switch links. The time for STA (920) to switch links is the time required for STA (920) to change frequency and communication parameters so as to be able to receive frames from at least one AP among a plurality of APs (e.g. AP 2 (930) and AP 3 (930)) by changing the frequency. The link switching time may be a time pre-negotiated between STA (920) and the AP MLD. Alternatively, the link switching time may be included in the RAI frame transmitted by STA (920). When STA (920) supports MLO, STA (920) may be able to receive frames from both AP 2 (930) and AP 3 (930) after link switching. When STA (920) supports MLO and performs enhanced multi-link single radio (EMLSR) operation, STA (920) may perform clear channel assessment (CCA) on the links on which AP 2 (930) and AP 3 (930) operate after link switching, and upon receiving an initial control frame from AP 2 (930) or AP 3 (930), may perform frame transmission and reception on the link. The initial control frame may be a multi-user request to send (MU-RTS) trigger frame or a buffer status report poll (BSRP) trigger frame.

Meanwhile, AP 1 (910) may indicate to the plurality of APs to which STA (920) is attempting to roam (AP 2 (930) and AP 3 (930)) the expected roaming timing when STA (920) performs roaming. When STA (920) includes AAR control information in the RAI frame or a response frame to the RAI frame, AP 1 (910) may indicate to the plurality of APs that STA (920) is requesting uplink resources. AP 2 (930) and AP 3 (930) may prepare to transmit a trigger frame to verify the roaming of STA (920). The trigger frame is a frame that requests an uplink frame from STA (920). AP 2 (930) and AP 3 (930) may transmit a trigger frame to STA (920) after the expected roaming timing of STA (920). The expected roaming timing of STA (920) may be after the link switching time from the roaming start time of STA (920), or after a time longer than the link switching time from the roaming start time of STA (920). When STA (920) performs EMLSR operation, the trigger frame may be an MU-RTS trigger frame.

After switching links, STA (920) sets the MediumSyncDelay timer, which is a timer for correctly setting the NAV, because STA (920) was unable to set the network allocation vector (NAV) on the links on which AP 2 (930) and AP 3 (930) operate. The STA (920) performs CCA operation until the MediumSyncDelay timer expires, and frame transmission may not be possible or only transmission of a request to send (RTS) frame may be possible. The STA (920) may release the MediumSyncDelay timer when a frame is correctly received. After switching links, STA (920) may receive trigger frames from AP 2 (930) and AP 3 (930). STA (920) may select one AP (AP 2 (930)) from among AP 2 (930) and AP 3 (930). When selecting one AP from among AP 2 (930) and AP 3 (930), the AP with better reception quality of the trigger frame may be selected. Alternatively, AP 2 (930) and AP 3 (930) may operate on different frequencies, and STA (920) may select an AP by choosing one of the two. STA (920) may have received only the trigger frame from AP 2 (930) without receiving the trigger frame from AP 3 (930). When STA (920) receives the trigger frame from AP 2 (930), STA (920) releases the MediumSyncDelay and transmits a response frame to AP 2 (930). The response frame may be various types of frames such as a power save (PS)-Poll frame, a data frame, a quality of service (QoS) data frame, a Null frame, a QoS Null frame, or a CTS frame. When the trigger frame from AP 2 (930) is an MU-RTS trigger frame, the response frame from STA (920) is a CTS frame. The response frame of STA (920) may include context information of STA (920). The context information includes at least one of the uplink sequence number (SN) and packet number (PN) of STA (920). The receiver address of the response frame of STA (920) may be set to the MAC address of the AP MLD (SMD AP MLD) to which AP 2 (930) belongs, instead of the MAC address of AP 2 (930). Setting the receiver address to the MAC address of the AP MLD indicates that AP 2 (930) is performing a roaming operation. When the response frame of STA (920) is a data frame (QoS data frame) or a Null frame (QoS Null frame), STA (920) may set the More Data bit included in the MAC header of the data frame to 1 to indicate that STA (920) has data to transmit on the uplink. When the response frame of STA (920) is a PS-Poll frame or a CTS frame, the Duration value included in the MAC header may indicate a time longer than the transmission length of the PS-Poll frame or CTS frame (e.g. by adding several (one to multiple) symbol durations) to indicate that data to be transmitted on the uplink exists. When STA (920) and AP 2 (930) exchange a trigger frame and a response frame, data communication between STA (920) and AP 2 (930) is possible. The trigger frame from AP 2 (930) may establish a transmission opportunity (TXOP), which is a communication period during which a plurality of frames may be transmitted. When the More Data bit in the MAC header of the response frame from STA (920) is set to 1, or when STA (920) has requested uplink resources through AAR control information transmission, or when STA (920) has indicated the presence of uplink data through length information of the control frame of the response frame, AP 2 (930) may allocate uplink resources to STA (920) within the TXOP through a trigger frame or allocate uplink resources to STA (920) through a separate channel access procedure. AP 2 (930) may transmit downlink data within the TXOP or transmit downlink data to STA (920) through a separate channel access procedure.

The machine learning unit and machine learning algorithm of FIG. 1 through FIG. 4 may be used by STA (920) to determine whether to perform a roaming operation. In an embodiment, the search by STA (920) for neighboring APs may be based on a determination by the machine learning unit. The input to the machine learning unit may include channel status and beacon information of neighboring APs, and the machine learning unit may determine whether roaming is necessary and select the most suitable target AP.

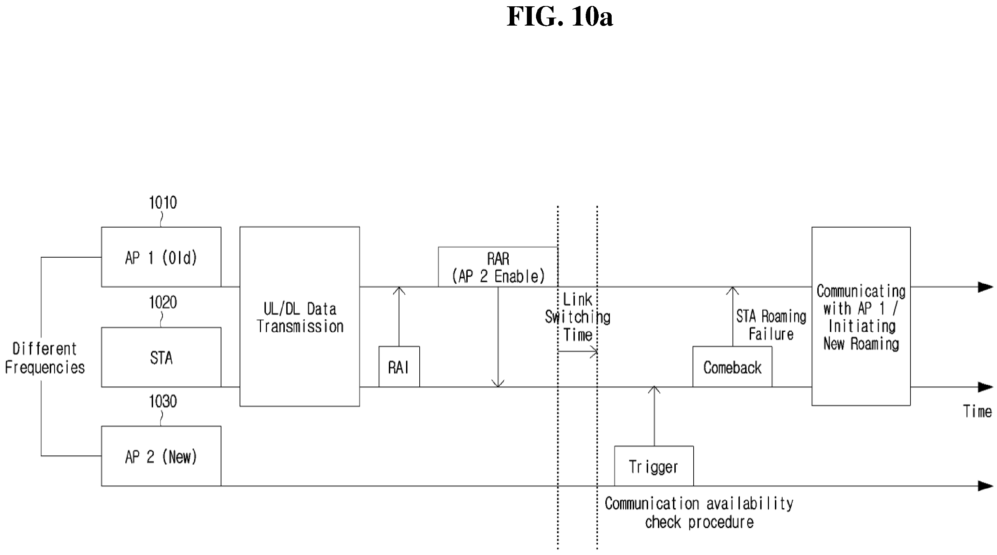

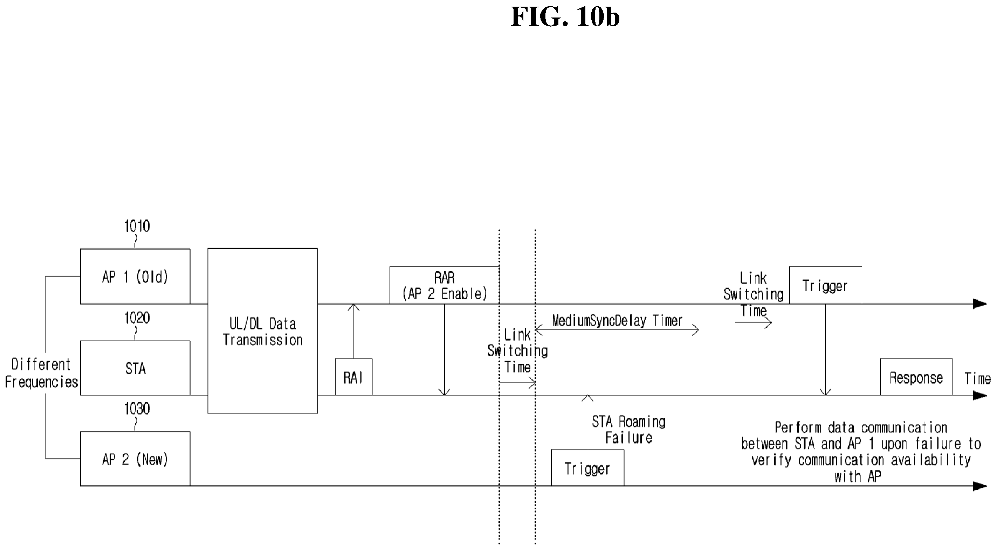

FIG. 10a and FIG. 10b are diagrams illustrating a method of verifying communication capability during wireless LAN roaming to which the present disclosure is applied.

Referring to FIG. 10a and FIG. 10b, a wireless LAN terminal and a plurality of APs may operate. The wireless LAN terminal may be referred to as a non-AP station (STA) or STA. The plurality of APs may constitute one single mobility domain (SMD) AP multi-link device (MLD). The SMD AP MLD supports multi-link operation (MLO). In an embodiment, the plurality of APs may constitute an SMD AP MLD. The plurality of APs are non-collocated APs. Within the SMD AP MLD, the plurality of APs exchange control information. Each of the plurality of APs may constitute the MLD lower MAC sublayer of the SMD AP MLD, and a separate device or entity constituting the MLD upper MAC sublayer may exist above the plurality of APs. Alternatively, each of the plurality of APs may constitute both the MLD upper MAC sublayer and the MLD lower MAC sublayer, and the SMD AP MLD may be constituted in the form of a group of the plurality of APs. Each AP constituting the SMD AP MLD may constitute at least one link. In the present disclosure, for ease of explanation, each AP constituting the SMD AP MLD constitutes one link. However, it should be understood that each AP may constitute one or more links. A STA operating in connection with the SMD AP MLD is associated with at least one AP among the APs constituting the SMD AP MLD and performs communication. For ease of explanation, the SMD AP MLD may be referred to as an AP MLD. The links constituted by each AP may be configured on different frequencies. That is, each AP may operate on a different frequency.

A STA (1020) may communicate with AP 1 (1010) among the APs of the AP MLD. During communication with AP 1 (1010), the STA (1020) may determine that the communication quality of AP 1 (1010) is poor. The STA (1020) may search for APs and may discover AP 2 (1030) belonging to the same AP MLD as AP 1 (1010). The STA (1020) may transmit a roaming announcement indication (RAI) frame including information on APs to which STA (1020) is attempting to roam (e.g. the identifier of AP 2 (1030) (e.g. link ID(identified), MAC address)). AP 1 (1010) transmits a response frame (ACK frame or BlockAck (BA) frame) to STA (1020) upon receiving the RAI frame from STA (1020). AP 1 (1010) transmits a roaming announcement response (RAR) frame to STA (1020). The RAR frame may include information on APs to which STA (1020) can roam (e.g. AP 2 (1030)). The roaming-capable AP information indicated by the RAR frame may differ from the information on APs to which STA (1020) is attempting to roam that is included in the RAI frame. The STA (1020) transmits a response frame (ACK frame or BlockAck (BA) frame) to the AP upon receiving the RAI frame from AP 1 (1010). As an alternative to the RAI frame and RAR frame, the RAI frame may not include information on APs to which STA (1020) is attempting to roam, or the RAR frame may not include information on APs to which STA (1020) is attempting to roam. The RAI frame may include AAR (AP assistance request) control information. A response frame to the RAR frame may include AAR control information. The AAR control information is control information included in an A-control format in the high throughput (HT) control field of the MAC header, and includes a link bitmap corresponding to the link to which STA (1020) is attempting to roam. When STA (1020) transmits a frame including AAR control information, STA (1020) is rapidly requesting uplink resources on the link indicated by the link bitmap included in the AAR control information. When STA (1020) transmits AAR control information, the communication delay of STA (1020) caused by the inability to communicate during roaming is compensated. When AAR information is included in the response frame to the RAR frame, the response frame may be transmitted in the form of an aggregated MAC protocol data unit (A-MPDU) in which an ACK or BlockAck frame is concatenated with a QoS Null frame containing AAR control information in the MAC header. The STA (1020) may start roaming immediately after exchanging the RAI frame and the RAR frame. One of the RAI frame and the RAR frame may be omitted. When one of the RAI frame and the RAR frame is omitted, STA (1020) may start roaming immediately after transmitting the RAI frame or immediately after receiving the RAR frame. When the exchange of RAI frame and RAR frame between AP 1 (1010) and STA (1020) is completed and STA (1020) starts roaming (or when one of the RAI frame or RAR frame is omitted and STA (1020) starts roaming), STA (1020) may switch links. The time for STA (1020) to switch links is the time required for STA (1020) to change frequency and communication parameters so as to be able to receive frames from another AP (e.g. AP 2 (1030)) by changing the frequency. The link switching time may be a time pre-negotiated between STA (1020) and the AP MLD. Alternatively, the link switching time may be included in the RAI frame transmitted by STA (1020).

STA (1020) may determine that the signal strength of AP 2 (1030) is not suitable for roaming. In an embodiment, the received signal quality of AP 2 (1030) may deteriorate. Alternatively, the received signal quality of AP 1 (1010) may improve sufficiently to resume communication. STA (1020) may wish to discontinue the roaming operation and resume communication with AP 1 (1010). STA (1020) may resume operation on the link on which AP 1 (1010) operates. Accordingly, STA (1020) may ignore or be unable to receive the trigger frame from AP 2 (1030), and STA (1020) does not respond to the trigger frame from AP 2 (1030). Alternatively, STA (1020) may not switch to the frequency on which AP 2 (1030) operates.

Referring to FIG. 10a, STA (1020) transmits a comeback frame to AP 1 (1010). The comeback frame is a frame indicating that STA (1020) is discontinuing roaming and resuming communication with AP 1 (1010). The comeback frame may be a frame in various formats such as an action frame, a data frame, a PS-Poll frame, or an RTS frame. After transmitting the comeback frame to AP 1 (1010), STA (1020) performs data communication with AP 1 (1010) or performs a new roaming operation when roaming conditions are satisfied.

Referring to FIG. 10b, AP 1 (1010) may transmit a trigger frame including the association identifier (AID) of STA (1020) or a trigger frame allocating resources through an uplink OFDMA (orthogonal frequency division multiple access) random access (UORA) scheme after a predetermined time from the start of the roaming operation of STA (1020) (e.g. link switching time + maximum transmission length of the trigger frame of AP 2 (1030) + link switching time + response frame transmission time to the trigger frame, or link switching time + maximum transmission length of the trigger frame + PIFS + link switching time). The trigger frame transmitted by AP 1 (1010) after the predetermined time is transmitted to determine whether roaming was successful. When STA (1020) does not respond to the trigger frame from AP 1 (1010), AP 1 (1010) may determine that STA (1020) has successfully performed roaming. When STA (1020) does not respond after the transmission of the trigger frame from AP 1 (1010), AP 1 (1010) sets a deletion timer. The start time of the deletion timer may be one of the following: the start time of trigger frame transmission by AP 1 (1010), the completion time of trigger frame transmission, or the time at which it is confirmed that STA (1020) has not responded to the trigger frame after its transmission. When STA (1020) does not transmit a frame to AP 1 (1010) while the deletion timer is in progress, AP 1 (1010) deletes the context information of STA (1020) (e.g. PN, SN, BA scoreboard, transmission buffer). When STA (1020) responds to the trigger frame from AP 1 (1010), AP 1 (1010) may determine that STA (1020) has failed to roam and is communicating with AP 1 (1010). When STA (1020) discontinues the roaming operation, STA (1020) transmits a response frame to the trigger frame from AP 1 (1010). The response frame transmitted by STA (1020) may be a comeback frame. The comeback frame is a frame indicating that STA (1020) is discontinuing roaming and resuming communication with AP 1 (1010). The comeback frame may be a frame in various formats such as an action frame, a data frame, a PS-Poll frame, or an RTS frame. After transmitting the comeback frame to AP 1 (1010), STA (1020) performs data communication with AP 1 (1010) or performs a new roaming operation.

The machine learning unit and machine learning algorithm of FIG. 1 through FIG. 4 may be used by STA (1020) to determine whether to perform a roaming operation. In an embodiment, the search by STA (1020) for neighboring APs may be based on a determination by the machine learning unit. The input to the machine learning unit may include channel status and beacon information of neighboring APs, and the machine learning unit may determine whether roaming is necessary and select the most suitable target AP.

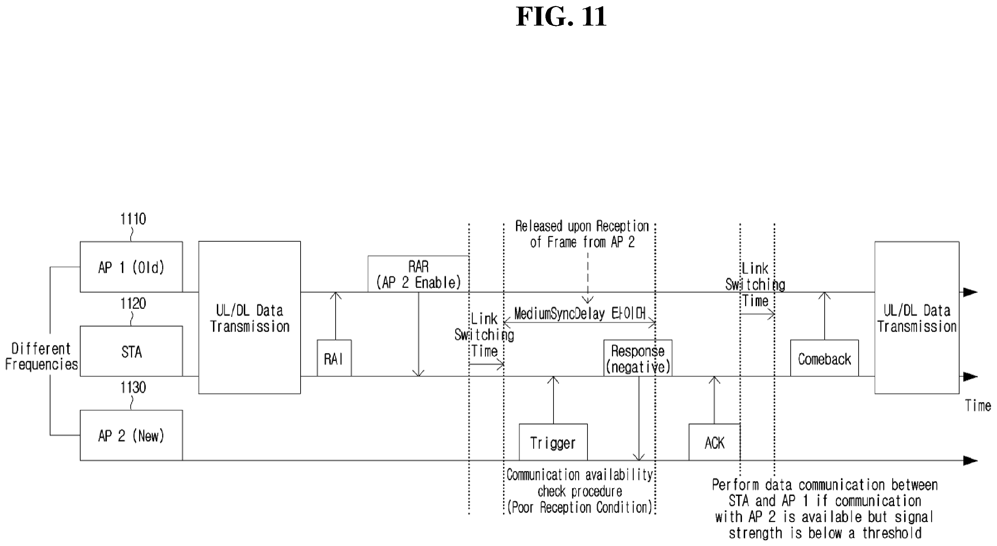

FIG. 11 is a diagram illustrating a method of verifying communication capability during wireless LAN roaming to which the present disclosure is applied.

Referring to FIG. 11, a wireless LAN terminal and a plurality of APs may operate. The wireless LAN terminal may be referred to as a non-AP station (STA) or STA. The plurality of APs may constitute one single mobility domain (SMD) AP multi-link device (MLD). The SMD AP MLD supports multi-link operation (MLO). In an embodiment, the plurality of APs may constitute an SMD AP MLD. The plurality of APs are non-collocated APs. Within the SMD AP MLD, the plurality of APs exchange control information. Each of the plurality of APs may constitute the MLD lower MAC sublayer of the SMD AP MLD, and a separate device or entity constituting the MLD upper MAC sublayer may exist above the plurality of APs. Alternatively, each of the plurality of APs may constitute both the MLD upper MAC sublayer and the MLD lower MAC sublayer, and the SMD AP MLD may be constituted in the form of a group of the plurality of APs. Each AP constituting the SMD AP MLD may constitute at least one link. In the present disclosure, for ease of explanation, each AP constituting the SMD AP MLD constitutes one link. However, it should be understood that each AP may constitute one or more links. A STA operating in connection with the SMD AP MLD is associated with at least one AP among the APs constituting the SMD AP MLD and performs communication. For ease of explanation, the SMD AP MLD may be referred to as an AP MLD. The links constituted by each AP may be configured on different frequencies. That is, each AP may operate on a different frequency.

A STA (1120) may communicate with AP 1 (1110) among the APs of the AP MLD. During communication with AP 1 (1110), the STA (1120) may determine that the communication quality of AP 1 (1110) is poor. The STA (1120) may search for APs and may discover AP 2 belonging to the same AP MLD as AP 1 (1110). The STA (1120) may transmit a roaming announcement indication (RAI) frame including information on APs to which STA (1120) is attempting to roam (e.g. the identifier of AP 2 (1130) (e.g. link ID(identified), MAC address)). AP 1 (1110) transmits a response frame (ACK frame or BlockAck (BA) frame) to STA (1120) upon receiving the RAI frame from STA (1120). AP 1 (1110) transmits a roaming announcement response (RAR) frame to STA (1120). The RAR frame may include information on APs to which STA (1120) can roam (e.g. AP 2 (1130)). The roaming-capable AP information indicated by the RAR frame may differ from the information on APs to which STA (1120) is attempting to roam that is included in the RAI frame. The STA (1120) transmits a response frame (ACK frame or BlockAck (BA) frame) to the AP upon receiving the RAI frame from AP 1 (1110). As an alternative to the RAI frame and RAR frame, the RAI frame may not include information on APs to which STA (1120) is attempting to roam, or the RAR frame may not include information on APs to which STA (1120) is attempting to roam. The RAI frame may include AAR (AP assistance request) control information. A response frame to the RAR frame may include AAR control information. The AAR control information is control information included in an A-control format in the high throughput (HT) control field of the MAC header, and includes a link bitmap corresponding to the link to which STA (1120) is attempting to roam. When STA (1120) transmits a frame including AAR control information, STA (1120) is rapidly requesting uplink resources on the link indicated by the link bitmap included in the AAR control information. When STA (1120) transmits AAR control information, the communication delay of STA (1120) caused by the inability to communicate during roaming is compensated. When AAR information is included in the response frame to the RAR frame, the response frame may be transmitted in the form of an aggregated MAC protocol data unit (A-MPDU) in which an ACK or BlockAck frame is concatenated with a QoS Null frame containing AAR control information in the MAC header. The STA (1120) may start roaming immediately after exchanging the RAI frame and the RAR frame. One of the RAI frame and the RAR frame may be omitted. When one of the RAI frame and the RAR frame is omitted, STA (1120) may start roaming immediately after transmitting the RAI frame or immediately after receiving the RAR frame. When the exchange of RAI frame and RAR frame between AP 1 (1110) and STA (1120) is completed and STA (1120) starts roaming (or when one of the RAI frame or RAR frame is omitted and STA (1120) starts roaming), STA (1120) may switch links. The time for STA (1120) to switch links is the time required for STA (1120) to change frequency and communication parameters so as to be able to receive frames from an AP to which STA (1120) intends to roam (e.g. AP 2 (1130)) by changing the frequency. The link switching time may be a time pre-negotiated between STA (1120) and the AP MLD. Alternatively, the link switching time may be included in the RAI frame transmitted by STA (1120). When STA (1120) supports MLO, STA (1120) may be able to receive all frames from AP 2 (1130) after link switching. When STA (1120) supports MLO and performs enhanced multi-link single radio (EMLSR) operation, STA (1120) may perform clear channel assessment (CCA) on the links on which AP 2 (1130) operates after link switching, and upon receiving an initial control frame from AP 2 (1130), may perform frame transmission and reception on the link. The initial control frame may be a multi-user request to send (MU-RTS) trigger frame or a buffer status report poll (BSRP) trigger frame.

Meanwhile, AP 1 (1110) may indicate to the AP to which STA (1120) is attempting to roam (AP 2 (1130)) the expected roaming timing when STA (1120) performs roaming. When STA (1120) includes AAR control information in the RAI frame or a response frame to the RAI frame, AP 1 (1110) may indicate to AP 2 (1130) that STA (1120) is requesting uplink resources. AP 2 (1130) may prepare to transmit a trigger frame to verify the roaming of STA (1120). The trigger frame is a frame that requests an uplink frame from STA (1120). AP 2 (1130) may transmit a trigger frame to STA (1120) after the expected roaming timing of STA (1120). The expected roaming timing of STA (1120) may be after the link switching time from the roaming start time of STA (1120), or after a time longer than the link switching time from the roaming start time of STA (1120). When STA (1120) performs EMLSR operation, the trigger frame may be an MU-RTS trigger frame.

After switching links, STA (1120) sets the MediumSyncDelay timer, which is a timer for correctly setting the NAV, because STA (1120) was unable to set the network allocation vector (NAV) on the link on which AP 2 (1130) operates. The STA (1120) performs CCA operation until the MediumSyncDelay timer expires, and frame transmission may not be possible or only transmission of a request to send (RTS) frame may be possible. The STA (1120) may release the MediumSyncDelay timer when a frame is correctly received. After switching links, STA (1120) may receive a trigger frame from AP 2 (1130). When STA (1120) receives the trigger frame from AP 2 (1130), STA (1120) releases the MediumSyncDelay and transmits a response frame to AP 2 (1130). The response frame may be various types of frames such as a power save (PS)-Poll frame, a data frame, a quality of service (QoS) data frame, a Null frame, or a QoS Null frame. When the trigger frame from AP 2 (1130) is an MU-RTS trigger frame, the response frame from STA (1120) is a CTS frame. STA (1120) may determine that the reception quality of the trigger frame from AP 2 (1130) is poor. STA (1120) may transmit a negative response frame to AP 2 (1130). The negative response frame is a response frame indicating that STA (1120) is canceling roaming. After STA (1120) transmits the negative response frame, STA (1120) may transmit a comeback frame to AP 1 (1110). Alternatively, AP 1 (1110) may retransmit the trigger frame after a predetermined time from the start of the roaming operation of STA (1120), and STA (1120) may respond to the trigger frame from AP 1 (1110) with a comeback frame. When AP 1 (1110) responds to the comeback frame, STA (1120) may perform frame exchange with AP 1 (1110). STA (1120) may perform a new roaming operation. The operation of transmitting the comeback frame may be the same as or similar to the operation in which STA (1120) transmits a comeback frame to AP 1 (1110) in FIG. 10a and FIG. 10b. In an embodiment, the predetermined time may be the predetermined time of FIG. 10b. The comeback frame may be the comeback frame of FIG. 10a and FIG. 10.

The machine learning unit and machine learning algorithm of FIG. 1 through FIG. 4 may be used by STA (1120) to determine whether to perform a roaming operation. In an embodiment, the search by STA (1120) for neighboring APs may be based on a determination by the machine learning unit. The input to the machine learning unit may include channel status and beacon information of neighboring APs, and the machine learning unit may determine whether roaming is necessary and select the most suitable target AP.

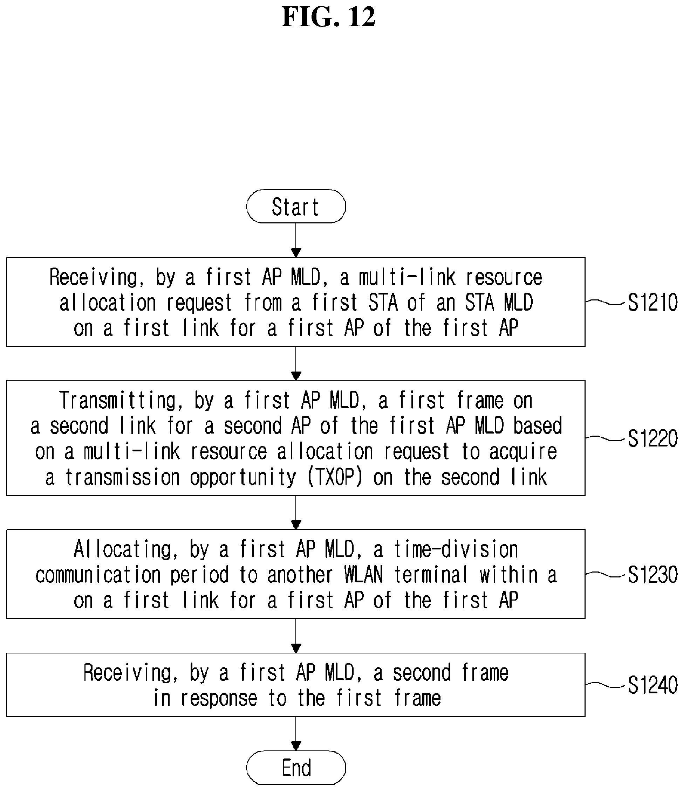

FIG. 12 is a flowchart illustrating a method of resolving a communication delay of a wireless LAN terminal in a multi-link wireless LAN network to which the present disclosure is applied.

Referring to FIG. 12, a method of operating a first AP MLD comprising a first AP associated with a first link and a second AP associated with a second link may be provided. Here, the first AP MLD may be AP MLD 2 described above with reference to FIG. 5a through FIG. 7.

Referring to FIG. 12, the first AP MLD may receive a multi-link resource allocation request from a first STA of a STA MLD on the first link for the first AP of the first AP MLD (S1210). Here, the STA MLD may be STA MLD 1 described above with reference to FIG. 5a through FIG. 7. In addition, the operation of the first AP MLD for the first AP of the first AP MLD may be an operation for a subordinate AP of the first AP MLD. In an embodiment, the operation of the first AP MLD for the first AP of the first AP MLD may be the operation of AP 2-1 of AP MLD 2, but may not be limited thereto. Thereafter, based on the multi-link resource allocation request, the first AP MLD may transmit a first frame on the second link for the second AP of the first AP MLD to acquire a TXOP on the second link (S1220). In an embodiment, the operation of the first AP MLD for the second AP of the first AP MLD may be the operation of AP 2-2 of AP MLD 2, but may not be limited thereto. In addition, the first frame may be the MU-RTS frame or QoS Null frame described above with reference to FIG. 5a through FIG. 7, but may not be limited thereto. Thereafter, the first AP MLD may allocate a time-division communication period to another wireless LAN terminal within the TXOP based on the first frame (S1230), and may receive a second frame in response to the first frame (S1240). Here, the second frame may be the CTS frame described above with reference to FIG. 5a through FIG. 7.

In addition, in an embodiment, the first AP MLD may comprise a first AP of the first AP MLD associated with a first link, a second AP of the first AP MLD associated with a second link, at least one transceiver configured to transmit and receive signals, at least one processor configured to control at least one of the first AP, the second AP, and the at least one transceiver, and a memory storing instructions that cause the first AP MLD to perform specific operations by the at least one processor. Here, the specific operations may include the operations described above and the operations described below.

In an embodiment, the multi-link resource allocation request may be included in a data frame transmitted by the STA MLD to a second AP MLD for the first STA. The first AP MLD and the second AP MLD may be included in the same multi-AP group, and the second AP MLD may be AP MLD 1 described above with reference to FIG. 5a through FIG. 7. The data frame including the multi-link resource allocation request may not be received by the second AP MLD, and the first AP MLD may receive the data frame including the multi-link resource allocation request on the first link by overhearing for the first AP of the first AP MLD. In addition, the multi-link resource allocation request may include an indicator requesting resources for the STA MLD on the second link. The first AP MLD may transmit the first frame on the second link for the second AP of the first AP MLD to allocate a time-division communication period. In addition, when reception of a data frame from the second AP MLD is not detected during a waiting time after the first AP MLD receives the data frame including the multi-link resource allocation request, the first AP MLD may transmit the first frame on the second link to allocate a time-division communication period within the TXOP.

In another embodiment, when reception of a data frame from the second AP MLD is not detected during a waiting time and an additional time after the first AP MLD receives the data frame including the multi-link resource allocation request, the first AP MLD may transmit the first frame on the second link to allocate a time-division communication period within the TXOP. Here, the additional time may be a time set based on retransmission of the STA MLD, as described above.

In addition, the first AP MLD may perform a channel access operation to transmit the first frame. When the backoff counter reaches 0 before the waiting time according to the channel access operation, the first AP MLD may transmit the first frame for the second AP of the first A MLD after the waiting time. On the other hand, when the backoff counter reaches 0 after the waiting time according to the channel access operation, the first AP MLD may transmit the first frame for the second AP of the first AP MLD at the slot boundary at which the backoff counter reaches 0.

In addition, the first frame includes at least one of information allocating a time-division communication period to the second AP MLD and information allocating a time-division communication period to the STA MLD, and the user information field of the first frame may include at least one of information indicating the second AP MLD and information indicating the STA MLD. Here, when the first AP MLD allocates a time-division communication period to the second AP MLD according to the information allocating a time-division communication period to the second AP MLD included in the first frame, the first AP MLD may receive the second frame from the second AP MLD on the second link in response to the first frame. The time-division communication period may be a period during which communication between the second AP MLD and the STA MLD is performed on the second link, as described above.

In addition, when a remaining TXOP remains with the first AP MLD after the time-division communication period allocated to the second AP MLD ends, the first AP MLD may reallocate a time-division communication period to another wireless LAN terminal or directly communicate with a wireless LAN terminal connected to the first AP MLD within the remaining TXOP, as described above.

In addition, in an embodiment, when the first AP MLD allocates a time-division communication period to the STA MLD according to the information allocating a time-division communication period to the STA MLD included in the first frame, the first AP MLD may receive the second frame from the STA MLD on the second link in response to the first frame. Here, the time-division communication period may be a period during which uplink transmission from the STA MLD to the second AP MLD is performed on the second link.

In addition, the first frame may further include bandwidth information based on orthogonal frequency division multiple access together with at least one of information allocating a time-division communication period to the second AP MLD and information allocating a time-division communication period to the STA MLD. The user information field of the first frame may include at least one of information indicating the second AP MLD and information indicating the STA MLD.

In addition, a time-division communication period is allocated after a preset period of time from the point at which the first AP MLD receives the second frame in response to the first frame, and the first AP MLD may perform communication with a wireless LAN terminal connected to the first AP MLD on a first bandwidth based on bandwidth information within the time-division communication period. Here, communication between the second AP MLD and the STA MLD may further be performed on a second bandwidth within the time-division communication period, as described above.

In addition, a synchronization delay timer starts when data frame transmission by the STA MLD ends, and the synchronization delay timer may be released based on at least one of transmission of the first frame, reception of the second frame, and transmission of a third frame based on the second frame. In another embodiment, the synchronization delay timer may start when data frame transmission by the STA MLD ends. Here, the first frame transmitted by the first AP MLD for the second AP of the first AP MLD is a frame that releases the synchronization delay timer, and the TXOP may not be allocated to the first AP MLD by the first frame, as described above.

The methods according to the present disclosure may be implemented in the form of program instructions executable by various computer means and recorded on a computer-readable medium. The computer-readable medium may include program instructions, data files, data structures, and the like, alone or in combination. The program instructions recorded on the computer-readable medium may be those specially designed and configured for the present disclosure, or may be those known and available to those skilled in the art of computer software.

Examples of the computer-readable medium include hardware devices specially configured to store and execute program instructions, such as ROM, RAM, and flash memory. Examples of program instructions include not only machine language code generated by a compiler, but also high-level language code executable by a computer using an interpreter or the like. The aforementioned hardware devices may be configured to operate as at least one software module to perform the operations of the present disclosure, and vice versa.

Although the present disclosure has been described with reference to the embodiments above, those skilled in the art will understand that the present disclosure may be variously modified and changed without departing from the spirit and scope of the present disclosure as set forth in the claims below.

### INDUSTRIAL APPLICABILITY

The foregoing may also be applicable to other systems.

## Claims

1. A method of operating a first access point (AP) multi-link device (MLD) comprising a first AP associated with a first link and a second AP associated with a second link in a wireless LAN system, the method comprising:
receiving, by the first AP MLD, a multi-link resource allocation request from a first station (STA) of a STA MLD on the first link for the first AP of the first AP MLD;
transmitting, by the first AP MLD, a first frame on the second link for the second AP of the first AP MLD based on the multi-link resource allocation request to acquire a transmission opportunity (TXOP) on the second link; and
allocating a time-division communication period to another wireless LAN terminal within the TXOP based on the first frame, and receiving a second frame in response to the first frame.

2. The method of claim 1,
wherein the multi-link resource allocation request is included in a data frame transmitted by the STA MLD to a second AP MLD for the first STA, wherein the first AP MLD and the second AP MLD are included in the same multi-AP group, and the data frame including the multi-link resource allocation request is not received by the second AP MLD, and
wherein the first AP MLD receives the data frame including the multi-link resource allocation request on the first link by overhearing for the first AP of the first AP MLD.

3. The method of claim 2,
wherein the multi-link resource allocation request includes an indicator requesting resources for the STA MLD on the second link, and
wherein the first AP MLD transmits the first frame on the second link for the second AP of the first AP MLD to allocate the time-division communication period.

4. The method of claim 3,
wherein when reception of a data frame from the second AP MLD is not detected during a waiting time after the first AP MLD receives the data frame including the multi-link resource allocation request, the first AP MLD transmits the first frame on the second link to allocate the time-division communication period within the TXOP.

5. The method of claim 4,
wherein when reception of a data frame from the second AP MLD is not detected during the waiting time and an additional time after the first AP MLD receives the data frame including the multi-link resource allocation request, the first AP MLD transmits the first frame on the second link to allocate the time-division communication period within the TXOP, and
wherein the additional time is set based on retransmission of the STA MLD.

6. The method of claim 4,
wherein the first AP MLD performs a channel access operation to transmit the first frame, wherein when a backoff counter reaches 0 before the waiting time according to the channel access operation, the first AP MLD transmits the first frame for the second AP of the first AP MLD after the waiting time, and
wherein when the backoff counter reaches 0 after the waiting time according to the channel access operation, the first AP MLD transmits the first frame for the second AP of the first AP MLD at the slot boundary at which the backoff counter reaches 0.

7. The method of claim 2,
wherein the first frame includes at least one of information allocating the time-division communication period to the second AP MLD and information allocating the time-division communication period to the STA MLD, and
wherein the user information field of the first frame includes at least one of information indicating the second AP MLD and information indicating the STA MLD.

8. The method of claim 7,
wherein when the first AP MLD allocates the time-division communication period to the second AP MLD according to the information allocating the time-division communication period to the second AP MLD included in the first frame, the first AP MLD receives the second frame from the second AP MLD on the second link in response to the first frame, wherein the time-division communication period is a period during which communication between the second AP MLD and the STA MLD is performed on the second link.

9. The method of claim 8,
wherein when a remaining TXOP remains with the first AP MLD after the time-division communication period allocated to the second AP MLD ends, the first AP MLD reallocates a time-division communication period to another wireless LAN terminal or directly communicates with a wireless LAN terminal connected to the first AP MLD within the remaining TXOP.

10. The method of claim 7,
wherein when the first AP MLD allocates the time-division communication period to the STA MLD according to the information allocating the time-division communication period to the STA MLD included in the first frame, the first AP MLD receives the second frame from the STA MLD on the second link in response to the first frame, wherein the time-division communication period is a period during which uplink transmission from the STA MLD to the second AP MLD is performed on the second link.

11. The method of claim 2,
wherein the first frame further includes bandwidth information based on orthogonal frequency division multiple access together with at least one of information allocating the time-division communication period to the second AP MLD and information allocating the time-division communication period to the STA MLD, and
wherein the user information field of the first frame includes at least one of information indicating the second AP MLD and information indicating the STA MLD.

12. The method of claim 11,
wherein the time-division communication period is allocated after a preset period of time from the point at which the first AP MLD receives the second frame in response to the first frame, and
wherein the first AP MLD performs communication with a wireless LAN terminal connected to the first AP MLD on a first bandwidth based on the bandwidth information within the time-division communication period, wherein communication between the second AP MLD and the STA MLD is further performed on a second bandwidth within the time-division communication period.

13. The method of claim 2,
wherein a synchronization delay timer starts when transmission of the data frame by the STA MLD ends, and the synchronization delay timer is released based on at least one of transmission of the first frame, reception of the second frame, and transmission of a third frame based on the second frame.

14. The method of claim 2,
wherein a synchronization delay timer starts when transmission of the data frame by the STA MLD ends, wherein the first frame transmitted by the first AP MLD for the second AP of the first AP MLD is a frame that releases the synchronization delay timer, and the TXOP is not allocated to the first AP MLD by the first frame.

15. A first access point (AP) multi-link device (MLD) comprising:
a first AP of the first AP MLD associated with a first link;
a second AP of the first AP MLD associated with a second link;
at least one transceiver configured to transmit and receive signals;
at least one processor configured to control at least one of the first AP, the second AP, and the at least one transceiver; and
a memory storing instructions that cause the first AP MLD to perform specific operations by the at least one processor,
wherein the specific operations comprise:
receiving a multi-link resource allocation request from a first station (STA) of a STA MLD on the first link for the first AP of the first AP MLD;
transmitting a first frame on the second link for the second AP of the first AP MLD based on the multi-link resource allocation request to acquire a transmission opportunity (TXOP) on the second link; and
allocating a time-division communication period to another wireless LAN terminal within the TXOP based on the first frame, and receiving a second frame in response to the first frame.
